# EUROPÄISCHE PATENTSCHRIFT

(11) **EP 2 554 353 B1**
(45) Veröffentlichungstag und Bekanntmachung des Hinweises auf die Patenterteilung: **07.06.2017**
(21) Anmeldenummer: 11405297.0
(22) Anmeldetag: 05.08.2011
(51) Int. Cl.: B29C 45/16, A46B 5/00, A46B 5/02, B29C 45/28, B29L 31/42

(54) **Verfahren zur Herstellung einer Zahnbürste und Zahnbürste**
Tooth brush and method for the manufacture of a tooth brush
Procédé de fabrication d'une brosse à dents et brosse à dents

(43) Veröffentlichungstag der Anmeldung: 06.02.2013
(73) Patentinhaber: Trisa Holding AG, 6234 Triengen (CH)
(72) Erfinder: Kirchhofer, Roger, 5057 Reitnau (CH); Schär, Michael, 6243 Egolzwil (CH); Zwimpfer, Martin, 6004 Luzern (CH); Zurfluh, Peter, 6055 Alpnach-Dorf (CH)
(74) Vertreter: Frei Patent Attorneys

(56) Entgegenhaltungen:
- EP-A2- 2 279 956
- WO-A1-94/06612
- WO-A1-99/56934
- JP-A- 5 031 756
- JP-A- 2002 153 322
- JP-A- 2011 046 208

## Beschreibung

Die Erfindung bezieht sich auf das Gebiet der Griffkörper, insbesondere für Körperpflegeartikel, wie Zahnbürsten, Zungenreiniger, Nassrasierer, etc. Die Erfindung betrifft insbesondere einen Griffkörper für eine Zahnbürste, mit einem Griffteil, einem Halsteil und einem Kopfteil, wobei der Griffkörper eine erste und zweite Materialkomponente aus thermoplastischem Kunststoff enthält. Die Erfindung betrifft ferner ein Verfahren zur Herstellung solcher Griffkörper sowie ein Spritzgiesswerkzeug zur Durchführung des Verfahrens.

### STAND DER TECHNIK

Es ist bekannt, Griffkörper für Körperpflegeartikel, insbesondere für Zahnbürsten, aus Kunststoff mittels eines Spritzgiessverfahrens herzustellen, wobei der Griffkörper aus mehreren, unterschiedlichen thermoplastischen Kunststoffen gespritzt wird. Hierzu wird in einer ersten Werkzeugkavität eines Spritzgiesswerkzeugs eine erste Kunststoffkomponente gespritzt, wobei die Werkzeugkavität komplett gefüllt wird. Die Werkzeugkavität stellt hier nicht eine Negativform des fertigen Griffkörpers sondern die Negativform des Teilkörpers aus der ersten Materialkomponente dar. Nachfolgend wird der Teilkörper aus der ersten Materialkomponente in eine weitere Werkzeugkavität umgelegt, welche grösser ist als der Teilkörper. Der leere Raum zwischen dem Teilkörper und der Kavitätenwand wird sodann mit einer zweiten Materialkomponente umspritzt, wobei diese sich beispielsweise material- oder formschlüssig mit der ersten Materialkomponente verbindet. Auf diese Weise wird ein Griffkörper aus zwei verschiedenen thermoplastischen Materialkomponenten geformt. Durch Wiederholung der vorgenannten Schritte können noch weitere Materialkomponenten angebracht werden. Dieses Verfahren weist jedoch einige Nachteile auf. So sind die Werkzeugkosten durch die Verwendung mehrerer - Werkzeugkavitäten zur Herstellung eines Spritzgussteils recht hoch. Ferner ist auch die Fertigungsgeschwindigkeit und dadurch die Produktivität wegen des Umlegeschrittes vergleichsweise tief.

Im Weiteren ist zu beachten, dass mit jeder Materialkomponente, welche verspritzt wird ein zusätzlicher Anspritzpunkt entsteht. Anspritzpunkte beinträchtigen jedoch das Erscheinungsbild eines Griffkörpers, so dass die Anzahl solcher Anspritzpunkte beziehungsweise der Anspritzpunkte auf der Oberfläche möglichst tief gehalten werden soll.

Ferner bleiben trotz den genannten technischen Möglichkeiten die Gestaltungsmöglichkeiten der aus verschiedenen Materialkomponenten hergestellten Griffkörper limitiert. Ein so genanntes Ineinanderfliessen verschiedener Kunststoffkomponenten ist nicht möglich oder nur durch Einsatz aufwändiger und teurer Spritzgiessformen umsetzbar.

Die Publikationsschrift JP 2002 153322 A beschreibt einen Griffkörper einer Zahnbürste aus Kunststoff. Die Zahnbürste zeichnet sich durch eine äussere Schicht aus, welche transparent oder halb-transparent ist, sowie durch innere Schichten, welche farbig sind.

Die Publikationsschrift JP 2011 046208 A beschreibt einen Griffkörper einer Zahnbürste aus Kunststoff, welcher in einem Spritzgussverfahren hergestellt wird. Die Zahnbürste zeichnet sich durch eine erste, transparente oder transluzente Komponente und eine zweite, farbige Komponente aus.

### DARSTELLUNG DER ERFINDUNG

Es ist deshalb Aufgabe der Erfindung, einen Griffkörper der eingangs genannten Art zu schaffen, welcher zwei oder mehrere Materialkomponenten aus Kunststoff umfasst, die im Hinblick auf ihre funktionelle Zweckbestimmung gezielt im Griffkörper angeordnet sind. Trotz des Einsatzes verschiedener funktioneller Materialkompönenten im Griffkörpers, soll der Griffkörper einfach und in wenigen Verfahrensschritten sowie kostengünstig herstellbar sein. Ferner soll der Griffkörper einen hohen Automatisierungsgrad in der Fertigung erlauben und in grosser Stückzahl herstellbar sein.

Die Erfindung wird durch die unabhängigen Ansprüche 1 und 9 gelöst. Die abhängigen Ansprüche beinhalten besondere Ausführungsformen und Weiterbildungen der Erfindung. Dabei sind Merkmale der Verfahrensansprüche, der Vorrichtungsansprüche und der Produktansprüche wo Sinn ergebend miteinander kombinierbar.

Die Erfindung zeichnet sich nun dadurch aus, dass die erste und zweite Materialkomponente einen gemeinsamen Anspritzpunkt aufweisen, welcher ausserhalb einer durch die Formtrennung ausgebildeten Formtrennlinie angeordnet ist. Der Griffkörper enthält ein Kopfteil, an welchem ein Funktionsteil, wie z. B. ein Bürstenkörper oder eine Klingenanordnung angeordnet ist, ein Griffteil, an welchem der Griffkörper vom Benutzer gehalten wird und ein Halsteil, welches Griffteil und Kopfteil miteinander verbindet.

In einer bevorzugten Weiterbildung des Griffkörpers umfasst wenigstens der Griffteil einen Mantelkörper aus der ersten Materialkomponente und einen, vom Mantelkörper wenigstens teilweise umhüllten Kernkörper aus der zweiten Materialkomponente. Der Mantelkörper zeichnet sich vorzugsweise dadurch aus, dass dieser mindestens teilweise die Oberfläche des Griffteils bzw. des Griffkörpers ausbildet.

Die zweite Materialkomponente kann nur im Griffteil, nur im Griffteil und Halsteil oder sowohl im Griffteil als auch im Halsteil und Kopfteil angeordnet sein. Die zweite Materialkomponente kann auch im Halsteil bzw. im Halsteil und Kopfteil als Kernkörper ausgebildet sein, welcher wenigstens teilweise oder sogar vollständig von einem Mantelkörper aus der ersten Materialkomponente umgeben ist.

In einer bevorzugten Ausführung der Erfindung enthält der Griffkörper, vorzugsweise mit Ausnahme des Anspritzpunktes, einen vollständig vom Mantelkörper aus der ersten Materialkomponente umgebenen Kernkörper aus der zweiten Materialkomponente, welcher nur im Griffteil, im Griffteil und Halsteil oder im Griffteil, Halsteil und Kopfteil ausgebildet ist.

Es kann ferner auch vorgesehen sein, dass der Kernkörper im Griffteil, im Halsteil und/oder im Kopfteil bereichsweise durch den Mantelkörper zur Oberfläche des Griffkörpers durchbricht und einen Oberflächenabschnitt des Griffkörpers ausbildet.

Der die zweite Materialkomponente umgebende Mantelkörper aus der ersten Materialkomponente kann z. B. eine Dicke von 0.5 - 5 mm und insbesondere von 1.5 - 3 mm aufweisen.

Gemäss einer besonders bevorzugten Ausführungsform der Erfindung bricht die im Griffteil als Kernkörper ausgebildete zweite Materialkomponente zum Kopfteil hin aus dem umhüllenden Mantelkörper der ersten Materialkomponente aus und tritt an die Oberfläche des Griffkörpers. Gemäss dieser Ausführung kann das Kopfteil vollständig aus der zweiten Materialkomponente bestehen. Dieser Ausführungsform liegt die Feststellung zugrunde, dass die Materialkomponente im Kopfteil eine andere technische Funktion zu erfüllen hat als die Materialkomponente im Griffteil. Daher sollen im Griffteil und Kopfteil verschiedene Materialkomponenten eingesetzt werden. So kann es zum Beispiel wichtig sein, dass die Materialkomponente, welche die Oberfläche des Griffteils ausbildet, sich durch eine gute Haptik auszeichnet, während die den Kopfteil ausbildende Materialkomponente für eine genügende Steifigkeit zu sorgen hat.

Im Weiteren ist es möglich, dass im Griffteil ein Material eingesetzt werden soll, welches sich für gewisse Funktionen im Kopfteil nicht eignet und beispielsweise für das später beschriebene AFT-Verfahren (die Verschweissung von Trägerplättchen mit dem Kopfteil benötigt gewisse Materialkombinationen) ungeeignet ist. Gespritzte Interdentalbürsten können beispielsweise ebenfalls auf diese Weise gestaltet werden. Der Griff als erste Materialkomponente bringt die Stabilität, während die zweite Materialkomponente das Borstenfeld bzw. die Borsten formt, was verschiedenen Funktionalitäten entspricht. Nicht zuletzt ist es auch möglich, dass für die funktionell nicht so anspruchsvollen Teile kostengünstigere Materialien eingesetzt werden, als für die funktionell anspruchsvollen Teile.

Der gemeinsame Anspritzpunkt der ersten und zweiten Materialkomponente ist auf der Vorder- oder auf der Rückseite des Griffkörpers angeordnet, bevorzugt auf der Rückseite des Griffkörpers. Der Anspritzpunkt ist ferner bevorzugt auf einer Mittellängsachse des Griffkörpers angeordnet. Die Vorderseite ist jene Seite des Griffkörpers, auf welcher der funktionswirksame Teil des Funktionsteils liegt. Bei einer Zahnbürste sind dies die Borsten. Ferner liegt auf der Vorderseite am vorderen Endabschnitt des Griffteils bevorzugt auch eine Daumenauflage zur Unterstützung des Haltegriffes. Die Rückseite ist entsprechend die der Vorderseite entgegen gesetzte Seite.

Ohne besonderen Massnahmen tritt die zweite Materialkomponente beim Anspritzpunkt an die Oberfläche des Griffkörpers. Deshalb kann, damit der Mantelkörper auch am Anspritzpunkt aus dem ersten Material besteht, vorgesehen sein, dass im Anschluss an das Spritzen der zweiten Materialkomponente wieder die erste Materialkomponente in einer solchen Menge gespritzt wird, dass der Anspritzpunkt ebenfalls aus der ersten Materialkomponente ausgebildet wird. Auf diese Weise ist die zweite Materialkomponente vollständig vom Material der ersten Materialkomponente umschlossen.

Den Oberflächenanteil, welchen die zweite Materialkomponente am Anspritzpunkt einnimmt, hängt vor allem von der Kühlzeit der ersten Materialkomponente ab. Eine lange Kühlzeit bringt weniger Oberflächenanteil als eine kurze Kühlzeit.

Die Formtrennlinie der Werkzeugkavität befindet sich bevorzugt seitlich zwischen Vorder- und Rückseite. Im Weiteren ist der Anspritzpunkt der ersten und zweiten Materialkomponente bevorzugt im Griffteil angeordnet. Der Anspritzpunkt ist bevorzugt 1 bis 20 mm, und insbesondere 3 bis 8 mm vom griffseitigen Ende entfernt. Falls weitere Materialkomponenten eingesetzt werden, kann deren Anspritzpunkt auf dem Griffkörper in Längsrichtung an einer beliebigen Stelle und in Querrichtung vorzugsweise auf der Mittellängsachse angeordnet sein.

In einer besonderen Weiterbildung des Griffkörpers weist dieser eine Durchgangsöffnung auf. Die Durchgangsöffnung ist vorzugsweise im Griffteil, Halsteil oder im Übergang zwischen Griffteil und Halsteil angeordnet. Im Bereich der Durchgangsöffnung wird der Griffkörper in Längsrichtung vorübergehend in zwei oder mehrere Teilarme aufgeteilt, welche sich wieder zu einem Körper vereinen und so die Durchgangsöffnung umschliessen. Die Teilarme können jeweils einen Mantelkörper aus der ersten Materialkomponente und einen, vom Mantelkörper umhüllten, strangförmigen Kernkörper aus der zweiten Materialkomponente enthalten bzw. daraus bestehen. Weiter ist es auch möglich, dass die Teilarme im Querschnitt nur aus der ersten oder der zweiten Materialkomponente bestehen.

Die beiden strangförmigen Kernkörper können sich nun beim Zusammenschluss der Teilarme zum Kopfteil hin:
a. wiedervereinen, und als gemeinsamer, strangförmiger und vom Mantelkörper umhüllten Kernkörper weiterlaufen, oder
b. als getrennte, vom Mantelkörper umhüllte Teilstränge parallel zueinander zum Kopfteil hin weiter verlaufen, und vorzugsweise im Halsteil oder Kopfteil zungenförmig auslaufen.

Der Griffkörper enthält bevorzugt eine dritte Materialkomponente aus einem thermoplastischen Kunststoff, welche vorzugsweise weichelastisch ist, und beispielsweise aus einem thermoplastischen Elastomer besteht. Die dritte Materialkomponente wird beispielsweise in einem separaten Spritzgiessschritt und unter Ausbildung eines eigenen Anspritzpunktes an den Griffkörper angeformt. Die dritte Materialkomponente dient z. B. der Ausbildung einer Daumenauflage. Überdies kann die dritte Materialkomponente auch zu dekorativen Zwecken oder aus ergonomischen Aspekten im Griffkörper vorgesehen sein. Ferner kann die dritte Materialkomponente auch der Überdeckung eines Längsabschnittes des Griffkörpers im Bereich eines Ausbruchs der zweiten Materialkomponente aus der ersten Materialkomponente dienen. Für eine diesbezügliche detaillierte Beschreibung wird auf die nachfolgenden Ausführungsbeispiele verwiesen.

Die dritte Materialkomponente wird beispielsweise im Bereich einer oben beschriebenen Durchgangsöffnung an den Griffkörper angeformt. Die Dritte Materialkomponente kann die Teilarme teilweise oder vollständig überdecken und/oder die Durchgangsöffnung verschliessen. Im Weiteren kann die dritte Materialkomponente auch in anderen Bereichen am Griffkörper angeordnet sein.

Neben einer dritten Materialkomponente können auch noch weitere Materialkomponenten angeformt werden. Diese können jeweils als Hartkomponente oder Weichkomponente ausgebildet sein und im Kopfteil, Halsteil und/oder Griffteil angeordnet sein. Die weiteren Materialkomponenten können ebenfalls in derselben Art verarbeitet werden, wie die erste und zweite Materialkomponente gemäss der Erfindung verarbeitet werden.

Im Weiteren ist es aber auch möglich, die besagte erste und zweite Materialkomponente im Spritzgiessverfahren nicht als Erstes zu verarbeiten. So kann zuerst ein Grundkörper, vorzugsweise aus einer oder mehreren Hartkomponenten und allenfalls teilweise aus Weichkomponenten hergestellt werden. Auf den Grundkörper werden anschliessend die erste und zweite Materialkomponente aufgebracht. Im Anschluss daran können allenfalls noch die besagte dritte oder weitere Materialkomponenten angebracht werden. Dadurch werden weitere spezielle geometrische Anordnungen der Materialkomponenten gemäss Erfindung im Griffkörper möglich. Mit dem Grundkörper wird also eine Basis für die weiteren Materialkörper gelegt, beispielsweise um die erfindungsgemässe Materialkombination an speziellen Stellen im Griffkörper einzusetzen. So lässt sich beispielsweise ein Griffteil als Grundkörper spritzgiessen, wobei anschliessend das erfindungsgemässe Verfahren nur im Bereich des Halsteils und/oder Kopfteils angewendet wird.

Zur Anformung der dritten oder weiteren Materialkomponenten wird der Griffkörper aus der ersten und zweiten Materialkomponente bevorzugt in eine weitere Werkzeugkavität umgelegt. In dieser wird dann die dritte oder weitere Materialkomponenten gespritzt. Wie erwähnt, kann die genannte Durchgangsöffnung am Griffkörper der Erstellung einer Daumenauflage dienen. Hierzu wird die Durchgangsöffnung teilweise oder komplett mit einer Materialkomponente umspritzt.

Die erste und zweite Materialkomponente können sich in der Materialbeschaffenheit und/oder der Farbe unterscheiden. Bevorzugt bestehen die beiden Materialkomponenten aus unterschiedlichen Kunststoffen und/oder aus unterschiedlichen Farben bzw. Transparenzen.

Folgende Materialkombinationen sind möglich:

| | erste Materialkomponente | zweite Materialkomponente |
|---|---|---|
| Kombination 1: | Hartkomponente | Hartkomponente |
| Kombination 2: | Hartkomponente | Weichkomponente |
| Kombination 3: | Weichkomponente | Hartkomponente |
| Kombination 4: | Weichkomponente | Weichkomponente |

Die Hartkomponente zeichnet sich durch einen harten Griff und eine vergleichsweise hohe Biegesteifigkeit aus. Sie wird insbesondere im Kopf und Halsteil und auch als Kernkörper im Griffteil eingesetzt und gibt dem Körper Stabilität. Daraus wird klar, dass besonders bevorzugt die zweite Materialkomponente eine Hartkomponente ist.

Als Hartkomponenten lassen sich verschiedene thermoplastische Kunststoff einsetzen. So eignen sich insbesondere folgende thermoplastische Kunststoff als Hartkomponenten:
- Styrolpolymerisate wie Styrolacrylnitril (SAN), Polystyrol (PS), Acrylnitrylbutadienstyrol (ABS), Styrolmethylmethacrylate (SMMA) oder Styrolbutadien (SB);
- Polyolefine wie Polypropylen (PP) oder Polyethylen (PE), beispielsweise auch in den Formen high density Polyethylen (HDPE) oder low density Polyethylen (LDPE);
- Polyester wie Polyethylenterephtalat (PET) in Form von säuremodifiziertem Polyethylenterephtalat (PETA) oder glykolmodifiziertem Polyethylenterephtalat (PETG), Polybutylenterephthalat (PBT), säuremodifiziertes Polycyclohexylenedimethyleneterephthalate (PCT-A) oder glykolmodifiziertes Polycyclohexylenedimethyleneterephthalate (PCT-G);
- Cellulosederivate wie Celluloseacetat (CA), Celluloseacetobutyrat (CAB), Cellulosepropionat (CP), Celluloseacetatphtalat (CAP) oder Cellulosebutyrat (CB);
- Polyamide (PA) wie PA 6.6, PA 6.10 oder PA 6.12;
- Polymethylmethacrylat (PMMA);
- Polycarbonat (PC);
- Polyoxymethylen (POM);
- Polyvinylchlorid (PVC);
- Polyurethan (PUR)

Besonders bevorzugt wird jedoch ein Polypropylen (PP) oder ein säuremodifiziertes Polycyclohexylenedimethyleneterephthalate (PCT-A), als Hartkomponente eingesetzt. PCT-A eignet sich insbesondere aufgrund seiner exzellenten transparenten Eigenschaften besonders gut als erste Materialkomponente, welche bekanntlich den Mantelkörper ausbildet. Die Hartkomponente aus PP weist bevorzugt ein E-Modul von 1000 - 2400 N/mm², vorzugsweise vom 1300 bis 1800 N/mm² auf.

Die Weichkomponente zeichnet sich durch seine weichelastischen Eigenschaften, welche an der Oberfläche des Griffkörpers eingesetzt für eine angenehme Griffigkeit (Haptik) sorgen. Daraus wird klar, dass besonders bevorzugt die erste Materialkomponente oder auch die dritte und weitere Materialkomponenten eine Weichkomponente ist.

Als Weichkomponenten lassen sich verschiedene thermoplastische Elastomere (TPE's) einsetzen. So eignen sich insbesondere folgende thermoplastische Elastomere als Weichkomponenten:
- Thermoplastische Polyurethan-Elastomere (TPE-U)
- Thermoplastische Styrol-Elastomere (TPE-S) wie beispielsweise ein Styrol-Ethylen-Butylen-Styrol-Copolymer (SEBS) oder Styrol-Butadien-StyrolCopolymer (SBS)
- Thermoplastische Polyamid-Elastomere (TPE-A)
- Thermoplastische Polyolefin-Elastomere (TPE-O)
- Thermoplastische Polyester-Elastomere (TPE-E)

Als Weichkomponente wird bevorzugt ein TPE-S eingesetzt. Im Weiteren können die Thermoplaste Polyethylen (PE) und Polyurethan (PU) sowohl als Hartkomponente als auch als Weichkomponente eingesetzt werden. Die Shore A Härten der Weichkomponente liegen vorzugsweise unter 90 Shore A.

Die erste und zweite Materialkomponente und insbesondere die Weichkomponenten und die Hartkomponente bilden im Spritzgussverfahren vorzugsweise einen Materialschluss aus. Je nach Wahl der Materialkomponenten und Verfahrensparametern ist es aber auch denkbar, dass es zu keinem Materialschluss, sondern zu einem Formschluss kommt. Bereiche mit Material- und Formschluss können sich abwechseln.

Ferner können die eingesetzten Materialkomponenten auch unterschiedliches Schwundverhalten oder Materialschlussverhalten haben, sodass sich an der Berührungsfläche der ersten und zweiten Materialkomponente ein spezieller optischer Effekt einstellt.

Der Griffkörper findet bevorzugt Verwendung als Griffkörper einer manuellen oder elektrischen Zahnbürste (Griffgehäuse). Im Bereich der manuellen Zahnbürsten können dies Einweg- oder Mehrwegzahnbürsten sein. Die elektrischen Zahnbürsten können oszillierende, schwenkende, translatorische oder kombinierte Bewegungen ausführen. Weiters können die elektrischen Zahnbürsten z. B. als Schallzahnbürsten oder Vibrationszahnbürsten ausgebildet sein. Ferner kann der erfindungsgemässe Griffkörper auch in Zungenreinigern, in Geräten zur Zahnzwischenraumpflege, wie Interdentalbürsten, bei Nassrasierern oder allgemein bei Körperpflegeapplikatoren Verwendung finden. Solche Körperpflegeapplikatoren können z. B. Nagellackpinsel oder Mascara-Applikatoren sein. Im Weiteren kann der erfindungsgemässe Griffkörper in Haushaltsartikeln verwendet werden. Dies können z.B. Besen, Bodenwischer oder Abwaschbürsten sein.

Ein Aspekt der Erfindung ist der Einsatz derselbigen im Bereich der Gehäuse von elektrischen Zahnbürsten oder generell Zahnbürsten mit Hohlkörpern als Griffkörper. Diese Körper sind vorzugsweise mindestens teilweise ähnlich wie Hohlzylinder ausgebildet und haben relativ dünne Wandstärken. Nach dem Einspritzen der ersten Materialkomponente wird ebenfalls die zweite Materialkomponente eingespritzt.

Diese tritt aufgrund der relativen Dünnwandigkeit zumindest partiell an die Oberfläche und ist auch im Bereich des Anspritzpunktes an der Oberfläche. Beispielsweise kann diese Anwendung dazu dienen, funktionale Elemente am bzw. auf dem Hohlkörper auszubilden. Beispielsweise könnte als erste Materialkomponente eine Hartkomponente eingesetzt werden und als zweite Materialkomponente eine Weichkomponente. Die Weichkomponente könnte im Bereich der Stelle eingesetzt werden, die zum Bedienen des Ein-/Ausschalter oder anderer Schalter genutzt wird.

Die aus dem erfindungsgemässen Griffkörper hergestellte Zahnbürste enthält ein im Kopfteil angebrachtes Borstenfeld aus einer Mehrzahl von einzelnen Borsten. Das Kopfteil besteht aus einer Hartkomponente und kann ergänzend auch eine Weichkomponente enthalten. Die Weichkomponente kann dazu dienen, auf der Rückseite des Kopfteils einen Zungenreiniger auszubilden oder auch um im Borstenfeld weichelastische Massage- und Reinigungselemente zu formen. Das Borstenfeld kann mittels einer bekannten Technik an das Kopfteil angebracht werden. Die Borsten eines Borstefeldes können aus einem unterschiedlichen oder aus dem gleichen Material bestehen.

Die Borsten können beispielsweise gespritzt sein und beispielsweise aus einem der folgenden Kunststoffe bestehen:
- Polyamid Elastomer (z.B. Grilflex ELG 5930 von Ems-Chemie AG)
- Polyester Elastomer (z.B. Riteflex 672 RF Nat oder Riteflex RKX 193 RF Nat von Ticona Polymers oder Hytrel 7248 von DuPont)

Die Kunststoffe für gespritzte Borsten haben beispielsweise eine Shore D Härte von 0 bis 100 vorzugsweise 30 bis 80.

Konventionell hergestellte Borsten, welche zum Beispiel zugespitzt oder zylindrisch sein können, sind vorzugsweise aus Polyamid (PA) oder Polyester (PBT) hergestellt.

Die Befestigung der Borsten im Kopfteil kann auf verschiedene Weisen erfolgen. Beispielsweise kann das Anchor Free Tufting (AFT) - Verfahren angewendet werden. Beim AFT-Verfahren (Anchor Free Tufting) werden die konventionellen, zylindrischen oder zugespitzten Borsten beziehungsweise die Borstenbündel ohne Hilfe eines Ankers am Kopfteil oder an einem Trägerplättchen befestigt. Die gerundeten Borsten werden dabei bündelweise profiliert und mit ihrem dem freien Nutzende gegenüberliegenden Ende durch Durchlässe im Trägerplättchen hindurchgeführt, so dass ein Endbereich der Borstenbündel über die Unterseite des Trägerplättchens hinausragt. An diesem über die Unterseite des Trägerplättchens hinausragenden Endbereich der Borsten werden diese durch Aufschmelzen, Verkleben oder Verschweissen befestigt. Das Trägerplättchen wird anschliessend mit den darin befestigten konventionellen Borsten in der Ausnehmung des Kopfbereichs der Zahnbürste verankert, beispielsweise durch Ultraschall-Schweissen. Die Ausnehmung im Kopfbereich ist dabei speziell an die Geometrie des Trägerplättchens angepasst. Neben den konventionellen Borsten kann das Trägerplättchen oder auch der Kopfbereich der Zahnbürste weichelastische Massage- und Reinigungselemente enthalten.

Alternativ wird das Trägerplättchen in einem Spritzgiesswerkzeug mit einer Hart- bzw. Weichkomponente überspritzt, um den Griffkörper um das Trägerplättchen zu bilden.

Weiter können die Borsten mittels des konventionellen Ankerstanz-Verfahren im Griffkörper befestigt werden. Hierzu werden mittels eines metallenen Ankerplättchens die Borstenbündel gefaltet und anschliessend in den Borstenaufnahmelöchern fixiert. Durch die Faltung mittels des Ankers weist das Borstenbündel zwei Hälften auf, die je eines der Enden der gefalteten Borsten umfassen. Nach dem Befestigen der Borsten folgt je nach Borstenart die Nachbearbeitung wie profilieren und schneiden. Der Kopfbereich der Zahnbürste mit den Borstenaufnahmelöchern kann dabei zusätzlich mit weichelastischen Massage- und Reinigungselementen versehen sein.

Selbstverständlich können auch andere Beborstungsverfahren wie beispielsweise IAP (Integrated Anchorless Production) oder IMT (In Mould Tufting) zum Einsetzen der Borsten verwendet werden. Wie beschrieben können die Borsten natürlich auch mittels Spritzgiessen direkt aus dem Kunststoffmaterial im Spritzgiesswerkzeug geformt werden.

Ebenfalls einsetzbar als Borstenmaterial oder als ein der Materialkomponente sind so genannte Biokunststoffe. Dies sind Kunststoffe die aus nachwachsenden Rohstoffen hergestellt sind.

Die Erfindung betrifft im Weiteren auch ein Verfahren zur Herstellung eines länglichen Griffkörpers eines Körperpflegeartikels, insbesondere einer Zahnbürste, aus mindestens zwei Materialkomponenten. Das Verfahren bezieht sich auf das Spritzgiessen wenigstens zweier Materialkomponenten in einem Spritzgiesswerkzeug mittels eines Heisskanalverfahrens. In bekannten Spritzgiessverfahren nach dem Heisskanalverfahren wird in einer ersten Werkzeugkavität eines Spritzgiesswerkzeuges ein Teilkörper aus einer ersten Materialkomponente gespritzt. Der Teilkörper wird anschliessend in eine weitere und grössere Werkzeugkavität umgelegt, in welche eine zweite Materialkomponente eingespritzt wird, welche den verbleibenden Formhohlraum in der Werkzeugkavität ausfüllt und sich mit der ersten Materialkomponente stoffschlüssig verbindet. Dieses Verfahren ist jedoch sehr umständlich und entsprechend teuer.

Das erfindungsgemäss Verfahren zeichnet sich nun dadurch aus, dass mittels der Verfahrensschritte des Anspruchs 9 mindestens zwei Kunststoffkomponenten über einen gemeinsamen Anspritzpunkt in eine gemeinsame Werkzeugkavität des Spritzgiesswerkzeuges gespritzt werden.

Was die Werkzeugkavität anbelangt, so ist diese der Natur eines herzustellenden Griffkörpers entsprechend bevorzugt als Längshohlraum mit einer Längsachse ausgebildet. Wird die Werkzeugkavität mit der zweiten Materialkomponente vollständig gefüllt, so wird beim Einspritzen der zweiten Materialkomponente zum Abschluss des Spritzgiessschrittes der Einspritzdruck gehalten und ein so genannter Nachdruck angesetzt, damit die Werkzeugkavität komplett gefüllt wird. Dieser Nachdruck entfällt jedoch beim Einspritzen der ersten Materialkomponente, da die Werkzeugkavität nicht vollständig mit der ersten Materialkomponente gefüllt wird und somit auch kein Gegendruck entsteht.

Die erste und zweite Materialkomponente werden zeitlich nacheinander und nicht miteinander in dieselbe Werkzeugkavität gespritzt. Zwischen dem Einspritzen der ersten und zweiten Materialkomponente erfolgt eine Abkühlungsphase, in welcher sich die erste Materialkomponente in der Werkzeugkavität abkühlt und teilverfestigt. In der Abkühlphase können die Werkzeugkavität bzw. deren Wände aktiv gekühlt sein. Die Abkühlphase kann z. B. 2 bis 35 Sekunden betragen. Sie ist unter anderem von der Gestaltung des Griffkörpers abhängig.
Die Wanddicke der ersten Materialkomponente kann massgeblich durch die Intensität und Dauer der Kühlung beeinflusst werden. Es ist nun möglich, die Werkzeugkavität nicht gleichmässig bzw. symmetrisch zu kühlen, sondern verschiedene Bereiche der Werkzeugkavität unterschiedlich stark bzw. lange zu kühlen, so dass über das Bauteil betrachtet unterschiedliche Wanddicken aus der ersten Materialkomponente entstehen. Dies heisst, dass das Bauteil verschieden stark auskühlt bzw. sich verschieden stark verfestigt. Dies beeinflusst wiederum die Ausbildung der fliessfähigen Seele und damit das Fliessverhalten und die Verteilung der nachfolgend eingespritzten zweiten Materialkomponente in der Werkzeugkavität. Daher können durch gezielte bzw. asymmetrische Kühlung der Werkzeugkavität bzw. der Kavitätenwand besondere Strukturen in der Materialverteilung im Griffkörper erzielt werden. Diese besonderen Strukturen können einem funktionellen Zweck dienen und/oder zu einem besonderen optischen Erscheinungsbild beitragen.

Zum Zeitpunkt des Einspritzens der zweiten Materialkomponente hat sich also die erste Materialkomponente in der Werkzeugkavität bereits etwas abgekühlt. Da die Abkühlung der Formmasse von der Wand der Werkzeugkavität ausgeht, verfestigen sich zuerst die äusseren Bereiche der Formmasse während der Kern erst zuletzt auskühlt und länger fliessfähig bleibt. Hierzu kann die Kavitätenwand aktiv gekühlt sein, um so den Verfestigungsprozess bessern steuern zu können. Die Kühlung kann jedoch auch passiv erfolgen, durch Wärmeableitung durch das Spritzgiesswerkzeug.

Dies bedeutet, dass in einem bestimmten Prozessstadium die eingespritzte erste Formmasse zur Kavitätenwand hin einen äusseren Mantelkörper aufweist, welche durch den fortschreitenden Verfestigungsprozess nicht mehr fliessfähig ist. Nicht fliessfähig heisst in diesem Zusammenhang, dass diese Formmasse im nachfolgenden, weiteren Spritzgiessschritt nicht von der zweiten Materialkomponente verdrängt werden kann. Die Formmasse enthält jedoch noch einen, vom Mantelkörper umgebenen, wärmeren Kernkörper, in welchem die Formmasse noch fliessfähig ist. Dieser Kernkörper wird auch heisse Seele oder plastische Seele genannt. Das Volumen des nicht fliessfähigen Mantelkörpers sowie des fliessfähigen Kernkörpers zum Zeitpunkt des Einspritzens der zweiten Materialkomponente kann über die Intensität der Kühlung und den Zeitabstand zwischen dem ersten und zweiten Spritzgiessschritt mittels einer Steuerungseinrichtung gesteuert werden. In Abhängigkeit vom Gesamtvolumen der eingespritzten ersten Materialkomponenten sowie vom Volumen des fliessfähigen Kernkörpers bzw. des Mantelkörpers werden unterschiedliche Verteilungsmuster der beiden Materialkomponenten innerhalb des Griffkörpers erzielt. Solche unterschiedliche Materialverteilungen werden anhand der weiter unten aufgeführten Ausführungsbeispiele näher erläutert.

Während des Spritzgiessens der zweiten Materialkomponente wird die heisse Seele der zuvor in die Werkzeugkavität gespritzten ersten Materialkomponente durch die zweite Materialkomponente substituiert und in Materialfliessrichtung in einen noch leeren Bereich der Werkzeugkavität verdrängt. Die an die Kavitätenwand anliegende, zumindest teilweise verfestigte erste Materialkomponente hingegen wird nicht verdrängt und umgibt die einfliessende zweite Materialkomponente wenigstens teilweise.

Der Anspritzpunkt liegt ausserhalb der Formtrennlinie der Werkzeugkavität. Der Natur eines länglichen Griffkörpers entsprechend, ist die Werkzeugkavität bevorzugt länglich ausgebildet und weist eine Längsachse auf. Der Anspritzpunkt ist vorzugsweise so angelegt, dass die Materialkomponenten quer zur Längsachse der Werkzeugkavität in den Hohlraum gespritzt werden. Dass heisst, dass die Verschlussrichtung der Nadeln vorzugsweise in einem Winkel von 85° bis 90° (Winkelgrad) zur Längsachse der Werkzeugkavität steht. Dies bewirkt eine Umlenkung des Materialflusses in die Richtung der Längsachse, welche auch der Materialfliessrichtung in der Werkzeugkavität entspricht, wenn der Materialfluss auf die gegenüber liegende Kavitätenwand oder auf den Mantelkörper trifft. Hierbei wird das eingespritzte Material insbesondere an der, dem Anspritzpunkt gegenüber liegenden Kavitätenwand umgelenkt. Diese Art des Einspritzens der Kunststoffkomponenten ist an sich bekannt und nichts Neues. Dadurch wird unter anderem gewährleistet, dass beide Endabschnitte der länglichen Werkzeugkavität vollständig mit Material gefüllt werden.

In vorliegender Erfindung hat diese Art des Einspritzens der Kunststoffkomponenten jedoch noch einen weiteren Vorteil. Gemäss einem ersten Verfahrenschritt soll nämlich erst ein Teilraum der Werkzeugkavität mit der ersten Materialkomponente gefüllt werden. Es soll insbesondere kein Material in den noch nicht zu füllenden Raumabschnitt der Werkzeugkavität vordringen. Da die Einspritzrichtung quer zur Längsrichtung der Werkzeugkavität liegt, kann verhindert werden, dass sich das eingespritzte erste Material über die gesamte Länge der Werkzeugkavität verteilt.

Der Anspritzpunkt kann nun an einem Endabschnitt des Griffkörpers angeordnet sein, so dass sich die zweite Materialkomponente nur in eine Materialfliessrichtung bewegt und die heisse Seele nur in die eine Materialfliessrichtung verdrängt wird. Es kann jedoch auch vorgesehen sein, dass der Anspritzpunkt zwischen zwei Endabschnitten des Griffkörpers, z. B. in einem Mittelbereich angeordnet ist, und die zweite Materialkomponente sich in zwei entgegen gesetzte Materialfliessrichtungen ausbreitet und die Seele der ersten Materialkomponente in zwei einander entgegen gesetzten Richtungen verdrängt wird. Auf diese Weise kann beispielsweise ein Griffkörper gestaltet werden, der an zwei Enden ein Funktionalteil aus der zweiten Materialkomponente besitzt.

In einer bevorzugten Weiterbildung der Erfindung bricht die nachfolgend eingespritzte zweite Materialkomponente in Materialfliessrichtung aus der diese umgebenden ersten Materialkomponente aus. Der in Materialfliessrichtung vordere, den Kopfteil ausbildende Endabschnitt der Werkzeugkavität wird dabei mindestens teilweise, vorzugsweise vollständig, mit der zweiten Materialkomponente gefüllt. Dies trifft beispielsweise zu, wenn das Gesamtvolumen der Werkzeugkavität abzüglich des Gesamtvolumens der eingespritzten ersten Materialkomponente grösser ist als die durch die zweite Materialkomponente verdrängte, fliessfähige Seele.

Gemäss einer anderen Weiterbildung der Erfindung verdrängt die zweite Materialkomponente die fliessfähige Seele der ersten Materialkomponente in Materialfliessrichtung, wobei die verdränge Seele in Materialfliessrichtung den vorderen Endabschnitt der Werkzeugkavität befüllt, so dass die zweite Materialkomponente ausser am Anspritzpunkt vollständig von der ersten Materialkomponente umgeben ist. Dies trifft beispielsweise zu, wenn das Gesamtvolumen der Werkzeugkavität abzüglich des Gesamtvolumens der eingespritzten ersten Materialkomponente kleiner ist als die durch die zweite Materialkomponente verdrängte, fliessfähige Seele.

Gemäss einer besonderen Weiterbildung der Erfindung teilt sich die Werkzeugkavität in Materialfliessrichtung bzw. Längsrichtung vorübergehend in wenigstens zwei Teilkanäle auf, welche entlang der Längsachse um einen Einsatzkern führen und sich anschliessend wieder vereinen. Die Teilkanäle schliessen eine Durchgangsöffnung am herzustellenden Griffkörper ein. Beim Einspritzen der zweiten Materialkomponente wird nun die fliessfähige Seele der ersten Materialkomponente in Materialfliessrichtung in einen vorderen Endabschnitt der Werkzeugkavität verdrängt. Die zweite Materialkomponente folgt der Werkzeugkavität und der verdrängten Seele unter Ausbildung zweier Teilstränge durch die Teilkanäle nach. Die beiden Teilstränge laufen nun im Anschluss an die Vereinigung der beiden Teilkanäle im Halsteil unter Ausbildung von zwei zungenförmigen Ausläufen getrennt und parallel zueinander. In diesem Fall füllt die verdrängte Seele wenigstens den Kopfteil vollständig aus.

Die beiden Teilstränge haben einen Abstand von 0.3 mm bis 3 mm, vorzugsweise von 0.5 mm bis 1.5 mm. Laufen die Teilstränge asymmetrisch aus, das heisst sind sie nicht gleich lang, so haben ihre Enden eine Distanz in Längsachsenrichtung von maximal 10 mm, vorzugsweise von maximal 5 mm zueinander.

Damit der Mantelkörper auch am Anspritzpunkt aus dem ersten Material besteht, kann vorgesehen sein, dass im Anschluss an das Spritzen der zweiten Materialkomponente wieder die erste Materialkomponente in einer solchen Menge gespritzt wird, dass der Anspritzpunkt ebenfalls aus der ersten Materialkomponente ausgebildet wird.
In einer weiteren Anwendung ist es möglich, die Oberfläche der ersten Materialkomponente nicht stetig, d.h. strukturiert, zu gestalten. Das heisst, es können beispielsweise treppenartige Stufen etc. in die Oberfläche integriert sein. Dies führt dazu, dass sich der Fluss der zweiten Komponente stetig verhält und sich innerhalb der ersten Materialkomponente ein Gegensatz zur Aussenkontur ausbildet.
Gemäss einer weiteren Anwendung ist die Werkzeugkavität nicht von konstanter Grösse. Die Grösse der Werkzeugkavität wird zwischen dem ersten und dem zweiten Spritzgiessschritt verändert. Dies kann dazu dienen, spezielle Geometrien im Griffteil zu formen oder auch spezielle optische Effekte zu erzielen. Zu diesem Zweck kann nach dem Einbringen der ersten Materialkomponente beispielsweise ein Kern gezogen werden, um die Werkzeugkavität zu vergrössern, damit die zweite Materialkomponente weitere Verbreitungsmöglichkeiten hat.

Die Offenbarung betrifft im Weiteren auch ein Spritzgiesswerkzeug zur Durchführung des oben beschriebenen Verfahrens. Beim Spritzgiessen von Thermoplasten wird die Kunststoffschmelze bekannter Weise von einem Plastifizieraggregat über ein Heisskanalsystem in die Werkzeugkavität transportiert.

In der Spritzgiesstechnologie unterscheidet man nun zwischen der so genannten Heisskanal- und Kaltkanal-Technologie. Als Heisskanaltechnologie bzw. -system wird beim Spritzgiessen von Thermoplasten ein System bezeichnet, welches gegenüber dem restlichen Spritzgiesswerkzeug thermisch isoliert und höher temperiert ist. Ein Heisskanalsystem ist vom Rest des Werkzeuges thermisch getrennt und separat beheizt, so dass die Kunststoffschmelze darin permanent fliessfähig bleibt. Dadurch kommt es zu keiner Erstarrung des Kunststoffes im Heisskanalsystem und es verbleibt kein Anguss am Bauteil. Weiterhin können durch die Heisskanalsysteme auch längere Fliesswege realisiert werden, weil der Druckverlust im Heisskanalsystem nicht durch ein Abkühlen der Schmelze und der damit verbundenen Viskositätserhöhung vergrössert wird.

Der Heisskanal endet mit der Heisskanaldüse, welche den Übergang von der Materialzuführung zur Werkzeugkavität im Spritzgiesswerkzeug darstellt. Die Heisskanaldüsen als auch das Heisskanalsystem werden auf das Temperaturfenster eingestellt in dem der Kunststoff plastisch verarbeitbar ist. Zur Regelung der Temperatur setzt man z. B. eine Heisskanalregelung ein, die permanent Soll- und Ist-Temperatur abgleicht und regelt. Ein Heisskanalsystem ist im Weiteren ein geschlossenes Systeme, bei welchem der Anspritzpunkt durch eine besondere Technik verschlossen wir. Dies geschieht durch eine oder mehrere Verschlussnadeln, welche Teil eines Nadelverschlusssystems sind. Die Verschlussnadeln werden zum Beispiel durch eine getrennt ansteuerbare Mechanik, z. B. elektrisch, pneumatisch oder hydraulisch betätigt.

Bei dem Nadelverschlusssystem wird nach dem Einspritzen der Kunststoffmasse der Anschnittdurchmesser durch die Verschlussnadel, welche zum Beispiel aus Stahl sein kann, verschlossen. Das verdrängte Material wird in das Kunststoffteil gedrückt. Die Nadel ist bündig mit der Oberfläche des Kunststoffteiles. Am gespritzten Produkt sieht man daher nur eine runde Markierung. Das oben beschriebene Heisskanalsystem findet nun auch im Spritzgiesswerkzeug Anwendung.

Beim Kaltkanalsystem hingegen ist das Kaltkanalsystem thermisch nicht vom Rest des Werkzeugs isoliert. Somit sind sowohl Werkzeug als auch das darin befindliche Kaltkanalsystem auf Temperaturen deutlich unterhalb der Verarbeitungstemperaturen des Kunststoffes temperiert. Dadurch erstarrt der thermoplastische Kunststoff auch im Kaltkanalsystem während der Produktion eines Bauteils. Dieser erstarrte Kunststoff wird Anguss oder Angusssystem genannt. Daraus ergeben sich einige Nachteile für diese Art des Einspritzens von Kunststoff in ein Spritzgiesswerkzeug. So muss der Anguss in einem separaten Arbeitsschritt vom Bauteil getrennt werden. Dies kann entweder durch zusätzliche Funktionselemente im Werkzeug oder nach der Entformung manuell bzw. maschinell geschehen. Nach der Abtrennung des Angusses verbleibt in der Regel eine Markierung am Bauteil. Nicht selten können ohne weitere Nachbearbeitungsschritte scharfe Kanten verbleiben.

Als Konsequenz fliesst ein Teil des Rohstoffes nicht in das gefertigte Produkt ein und muss entweder wiederverwertet oder entsorgt werden. Somit erhöht sich durch den Anguss das Schussvolumen und es muss mehr Kunststoff plastifiziert werden als letztendlich im Produkt vorhanden ist. Dies ist sowohl energetisch als auch in Bezug auf die Maschinenleistung nachteilig. Ferner wirken sich die Materialkosten durch das eingesetzte Mehrmaterial insbesondere bei teuren technischen Thermoplasten negativ auf die Wirtschaftlichkeit aus. Auch die erforderliche Nachbearbeitung des Produktes im Bereich des Anspritzpunktes wirkt sich negativ auf die Prozesseffizienz und Wirtschaftlichkeit aus.

Die EP-A-1 346 808 beschreibt nun ein Heisskanalsystem zur Herstellung von Spritzgiessteilen wie Salatsiebe aus zwei verschiedenen thermoplastischen Kunststoffen. Das Verschlussnadelsystem operiert mit einer einzigen, in einem Hauptkanal geführten Verschlussnadel, mittels welcher seitlich in den Hauptkanal einmündende, axial versetzt angeordnete Materialzufuhrkanäle verschlossen werden können. Beim Einspritzen des ersten Materials wird die vom Anspritzpunkt weiter entfernt liegende Kanaleinmündung für das zweite Material tatsächlich durch die Verschlussnadel abgedichtet, so dass nur das erste Material über den Hauptkanal in die Werkzeugkavität gespritzt wird. Beim Einspritzen der zweiten Materialkomponente muss jedoch die Kanaleinmündung für das erste Material offen gehalten werden. Um dennoch den Eintritt des ersten Materials in den Hauptkanal zu verhindern, wird in diesem Kanal ein Gegendruck angewendet. Diese Lösung ist kompliziert und technisch unbefriedigend, da sie eine konsequente Materialtrennung beim Einspritzvorgang nicht zulässt.

Es ist daher bekannt, mehrere Verschlussnadeln vorzusehen, welche die einzelnen Materialzufuhrkanäle individuell verschliessen. Diese Verschlussnadeln sind konstruktiv auf eine bestimmte Arbeitstemperatur ausgelegt und dichten bei einer namhaften Abweichung von der Arbeitstemperatur nicht mehr befriedigend. Dies rührt daher, dass Längenausdehnungseffekte ein vollständiges Verschliessen bzw. Abdichten nicht mehr ermöglichen. Das Dichten geschieht in diesem Fall von der Verschlussnadel auf eine konische Fläche am Ende der Nadel. Dadurch übertragen sich die Längenausdehnungseffekte 1:1 auf die Dichtheit.

Das Spritzgiesswerkzeug ist ebenfalls als Werkzeug mit einem Heisskanalsystem der oben beschriebenen Art ausgebildet, welches eine in eine Werkzeugkavität mündende Heisskanaldüse enthält, die als Nadelverschlussdüse ausgebildet ist. Die Heisskanaldüse enthält eine erste, als Hohlnadel ausgebildete Verschlussnadel, sowie eine zweite, in die Hohlnadeldüse einfahrbare, zylinderförmige Verschlussnadel. Die erste Verschlussnadel bildet in der Heisskanaldüse mit der aussen liegenden Kanalwand einen äusseren Materialzufuhrkanal und mit seiner axialen Durchgangsöffnung einen inneren Materialzufuhrkanal aus.

Die Offenbarung zeichnet sich nun dadurch aus, dass die Heisskanaldüse eine zylinderförmige Auslassöffnung aufweist, und die erste Verschlussnadel einen zylinderförmigen Endabschnitt aufweist, welcher so ausgestaltet ist, dass dieser formschlüssig in die Auslassöffnung einfahrbar ist, um so unter Ausbildung einer parallel zur Verschlussrichtung verlaufenden zylindrischen Dichtfläche den äusseren Materialzufuhrkanal zur Werkzeugkavität hin abzudichten.

In einer Weiterbildung weist die zweite Verschlussnadel ebenfalls einen zylinderförmigen Endabschnitt auf. Die Durchgangsöffnung im Endabschnitt der erste Verschlussnadel ist ebenfalls zylinderförmig und derart ausgestaltet, dass die zweite Verschlussnadel formschlüssig in die Durchgangsöffnung am Endabschnitt der ersten Verschlussnadel einfahrbar ist. Auf diese Weise vermag die zweite Verschlussnadel den inneren Materialzufuhrkanal zur Werkzeugkavität hin unter Ausbildung einer parallel zur Verschlussrichtung verlaufenden zylindrischen Dichtfläche abzudichten.

Die Verschlussnadeln können Längen von 50 mm bis 150 mm, insbesondere von rund 100 mm aufweisen. Der Durchmesser der ersten Verschlussnadel beträgt zwischen 8 mm und 20 mm vorzugsweise zwischen 10 mm und 15 mm betragen. Die Wandstärke der ersten hohlzylinderförmigen Verschlussnadel kann 0.3 - 1.2 mm, insbesondere 0.4 - 0.8 mm betragen. Die zylinderförmige Auslassöffnung der ersten Verschlussnadel kann eine axiale Länge von 0.5 - 1.5 mm, insbesondere 0.7 - 0.9 mm, aufweisen.

Der Durchmesser der zweiten Verschlussnadel kann 0.6 - 2.5 mm, insbesondere 0.8 - 1.2 mm betragen. Der zylinderförmige Endabschnitt der ersten Verschlussnadel kann eine axiale Länge von 1.2 - 2.4 mm, insbesondere von 1.5 bis 2.1 mm, aufweisen.

Der Durchmesser der zweiten Verschlussnadel beziehungsweise die Wandstärke der ersten Verschlussnadel, der Hohlnadel, hängt sehr stark von der zu verarbeitenden Kunststoffkomponente ab. Bei Materialkomponenten von niedriger Viskosität, d.h. mit einem guten Fliessverhalten, können geringere Spritzgiessdrücke angewendet werden und die Durchmesser der Materialzufuhrkanäle beziehungsweise die Wandstärken und Durchmesser der Düsenkomponenten können kleiner ausgelegt werden, als wenn Materialkomponenten mit höherer Viskosität, d.h. mit schlechterem Fliessverhalten, verarbeitet werden müssen. So sind die Durchmesser beziehungsweise Wandstärken bei der Verarbeitung von Polypropylen (PP) oder einem thermoplastischen Elastomer (TPE) kleiner als bei der Verarbeitung von säuremodifiziertes Polycyclohexylenedimethyleneterephthalate (PCT-A).

Ein Spritzgiesswerkzeug kann eine oder eine Mehrzahl von Werkzeugkavitäten mit jeweils einer Heisskanaldüse aufweisen. Auf diese Weise können in einem Spritzgiesswerkzeug mehrere Griffkörper gleichzeitig hergestellt werden. Obwohl die Spritzgiesszyklen zur Herstellung mehrerer Griffkörper vorzugsweise synchron geführt werden sollen, ist es vorteilhaft die einzelnen Spritzgiessvorgänge mit ihren dazugehörigen Werkzeugkavitäten unabhängig zu steuern. In der vorliegenden Offenbarung sind die Heisskanaldüsen der einzelnen Werkzeugkavitäten unabhängig steuerbar. Die Steuerung des Spritzgiessvorganges erfolgt bevorzugt über einen Regelkreis, in welchen auch die Temperaturführung mit einfliesst. Die Steuerungen können z.B. Servo-Steuerungen sein. So können beispielsweise insbesondere Öffnungszeiten für die erste oder auch die zweite Materialkomponente für jede Werkzeugkavität individuell festgelegt werden. Dieses Vorgehen beruht auf der Feststellung, dass die Temperaturführung der einzelnen Werkzeugkavitäten und Heisskanaldüsen, von welcher unter anderem auch die Füllmengen beziehungsweise die Materialmengen abhängig sind, in der Regel nicht über sämtlich Werkzeugkavitäten dieselbe ist, so dass auch die Umschaltzeitpunkte vom Zustand "Düse offen" zu "Düse geschlossen" individuell festgelegt werden müssen. Es gibt verschiedene Faktoren die eine individuelle Steuerung der Heisskanaldüsen erforderlich machen. So kann z.B. die Länge des Heisskanalsystems bei verschiedenen Heisskanaldüsen unterschiedlich lang sein. Im Weiteren ist auch die Kontrolle des Wärmehaushalts über das gesamte Spritzgiesswerkzeug mit ein Grund zur individuellen Steuerung der Heisskanaldüsen. So können kleinste TemperaturVeränderungen im Spritzgiesswerkzeug grosse Auswirkungen auf das Herstellungsverfahren haben.

Die Erfindung erlaubt die Herstellung von Griffkörpern, insbesondere von Zahnbürsten, mit den unterschiedlichsten optischen Erscheinungsformen und funktionellen Eigenschaften. Dank dem erfindungsgemässen Verfahren kann also Zahnbürsten mit einer grossen Variabilität bezüglich ihrer funktionellen Eigenschaften und ihrem optischen Aussehen hergestellt werden. Das optische Erscheinungsbild wird dabei durch unterschiedlich farbige oder gar transparente Materialkomponenten definiert, welche die erstarrten Fliessstrukturen der Materialkomponenten visualisieren. Die funktionellen Eigenschaften werden durch gezieltes Befüllen der einzelnen Abschnitte bzw. Regionen des Griffkörpers mit der ersten und/oder zweiten Materialkomponente und gegebenenfalls den weiteren Materialkomponenten erreicht.

Trotz dieser grossen Variabilität ist eine hohe Prozesssicherheit und Fertigungsgenauigkeit gewährleistet. Die erfindungsgemässen Griffkörper lassen sich überdies vollautomatisiert herstellen.

### KURZE BESCHREIBUNG DER ZEICHNUNGEN

Im Folgenden wird der Erfindungsgegenstand anhand von bevorzugten Ausführungsformen, welche in den beiliegenden Zeichnungen dargestellt sind, näher erläutert. Die Figuren zeigen jeweils Griffkörper von Zahnbürsten in ihrer Entstehungsphase oder als fertige Spritzgussteile sowie Teile von Spritzgiesswerkzeugen. Es zeigen jeweils schematisch:
- Figur 1-4:: die Herstellung eines Griffkörpers gemäss einer ersten Gestaltungsvariante anhand von vier schematischen Darstellungen eines Griffkörpers, welche unterschiedliche Verfahrensstadien im Herstellungsprozess darstellen;
- Figur 5-8:: die Herstellung eines Griffkörpers gemäss einer zweiten Gestaltungsvariante anhand von vier schematischen Darstellungen eines Griffkörpers, welche unterschiedliche Verfahrensstadien im Herstellungsprozess darstellen;
- Figur 9:: eine Draufsicht auf eine Werkzeugkavität zur Herstellung eines Griffkörpers nach dem Einspritzen der ersten Materialkomponente;
- Figur 10:: eine Draufsicht auf einen Griffkörper gemäss der ersten Gestaltungsvariante nach den Figuren 1 bis 4 nach dem Einspritzen der zweiten Materialkomponente;
- Figur 11:: eine Seitenansicht des Griffkörpers gemäss Figur 10;
- Figur 12:: eine Draufsicht auf einen Griffkörper gemäss einer Ausführungsart der zweiten Gestaltungsvariante mit einer Durchgangsöffnung;
- Figur 13:: eine Draufsicht auf eine weitere Ausführungsform eines Griffkörpers gemäss einer Ausführungsart der zweiten Gestaltungsvariante mit einer Durchgangsöffnung die durch eine dritte Materialkomponente verschlossen ist;
- Figur 14:: eine Draufsicht auf eine weitere Ausführungsform eines Griffkörpers gemäss einer Ausführungsart der zweiten Gestaltungsvariante mit einer Durchgangsöffnung die durch eine dritte Materialkomponente verschlossen ist;
- Figur 15a..b:: Querschnittsansichten durch den Griffkörper nach Figur 13 im Bereich der Daumenauflage;
- Figur 16a..b:: Querschnittsansichten durch den Griffkörper nach Figur 14 im Bereich der Daumenauflage;
- Figur 17-18:: Querschnittsansichten durch den Griffteil des Griffkörper nach Figur 10 bis 14 und 19;
- Figur 19:: eine Draufsicht auf eine weitere Ausführungsform eines Griffkörpers gemäss einer Ausführungsart der zweiten Gestaltungsvariante mit einer Durchgangsöffnung;
- Figur 20:: eine Draufsicht auf eine weitere Ausführungsform eines Griffkörpers gemäss einer Ausführungsart der zweiten Gestaltungsvariante mit einer Durchgangsöffnung;
- Figur 21:: eine Seitenansicht des Griffkörpers nach Figur 20;
- Figur 22-24:: Querschnittsansichten durch den Griffkörper nach Figur 20 und 21;
- Figur 25-28:: Querschnittsansichten einer Heisskanaldüse zur Herstellung eines Spritzgussteils.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die in den Figuren dargestellten Volumenverhältnisse von Materialkomponenten dienen nur der Veranschaulichung und entsprechen nicht zwingend einer massstabsgetreuen Wiedergabe der tatsächlichen Volumenverhältnisse.

Im Weiteren ist die vorliegende Erfindung nicht auf die in den Figuren dargestellten Ausführungsformen bzw. Gestaltungsvarianten beschränkt.

### WEGE ZUR AUSFÜHRUNG DER ERFINDUNG

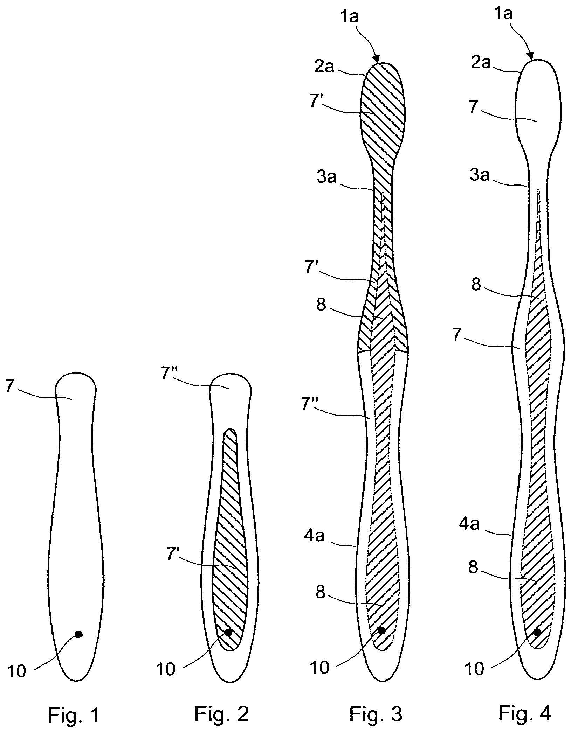

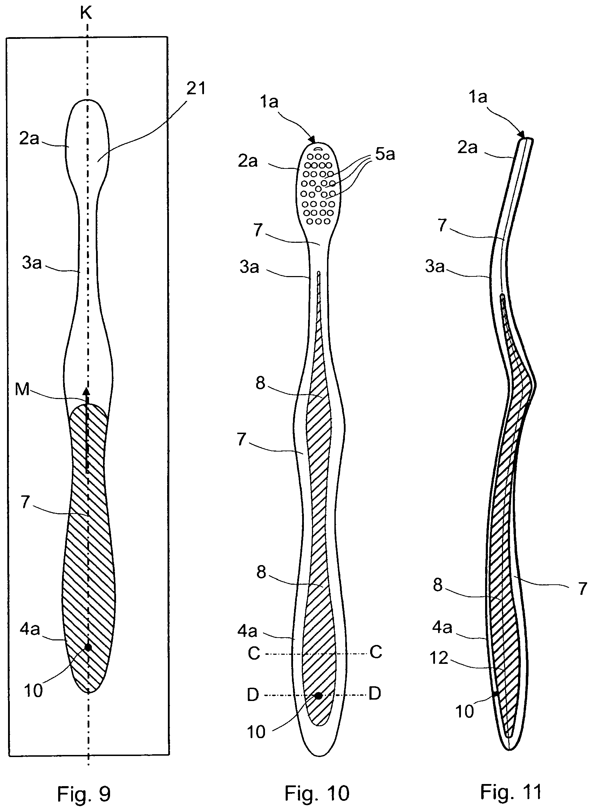

Die **Figuren 1 bis 4** zeigen rein schematisch die Herstellung eines Griffkörpers 1a gemäss einer ersten Gestaltungsvariante. Zur Herstellung des gezeigten Griffkörpers 1a in der ersten Gestaltungsvariante wird in einem ersten Schritt eine erste Materialkomponente 7 in eine Werkzeugkavität (nicht gezeigt) gespritzt. Die Werkzeugkavität bzw. der herzustellende Griffkörper 1a ist ein Längsbauteil und weist einen Griffteil 4a, einen Halsteil 3a und einen Kopfteil 2a auf. Der Anspritzpunkt 10 ist im Griffteil 4a angeordnet. Die Werkzeugkavität wird in einem ersten Schritt nur teilweise mit der ersten Materialkomponente 7 gefüllt, wobei bedingt durch die Anordnung des Anspritzpunktes 10 im Griffteil 4a wenigstens der Griffteil der Werkzeugkavität vollständig oder mindestens teilweise mit der ersten Materialkomponente gefüllt wird. Die eingespritzte erste Materialkomponente 7 nimmt dabei die Kontur der Werkzeugkavität im Griffteil 4a an (siehe Figur 1). Die Figur 1 zeigt schematisch die Umrisskontur des Körpers, der im ersten Einspritzvorgang mit der ersten Materialkomponente 7 geformt wird. Der Kopfteil 2a und vorzugsweise auch der Halsteil 3a der Werkzeugkavität werden hingegen nicht mit der ersten Materialkomponente 7 gefüllt (vergleiche auch mit Figur 9).

Der gezeigte Anspritzpunkt 10 ist in dieser Figur, wie auch in den weiteren Figuren die Draufsichten zeigen, angegeben. Die Angabe entspricht der Position des Anspritzpunktes 10 auf dem Körper bei Draufsicht. Er ist aufgrund seiner bevorzugten Lage auf der Rückseite des Griffkörpers eigentlich nicht sichtbar, ist aber aus erklärungstechnischen Gründen dennoch gezeigt.

Die eingespritzte erste Materialkomponente 7 kühlt im Anschluss an den ersten Spritzgiessschritt von der Kavitätenwand her zum Kern in ab, wobei eine wärmere und noch fliessfähige Seele 7' verbleibt, welche von einem nicht mehr fliessfähigen Mantelkörper 7" umgeben ist. Dies ist schematisch in Figur 2 gezeigt. Neben der Umrisskontur des Körper der im ersten Einspritzvorgang mit der ersten Materialkomponente 7 geformt wird, ist die fliessfähige Seele 7' schraffiert dargestellt. Auch der nicht mehr fliessfähige Mantelkörper 7" ist erkennbar.

In einem weiteren Schritt wird durch denselben Anspritzpunkt 10 die zweite Materialkomponente 8 in die Werkzeugkavität des Spritzgiesswerkzeugs gespritzt. Das Resultat dieses Schrittes ist in den Figuren 3 und 4 dargestellt. Die zweite Materialkomponente 8 wird in den in Figur 1 und 2 gezeigten Körpern über den Anspritzpunkt 10 eingespritzt und verdrängt die fliessfähige Seele 7' in Richtung Kopfteil 2a, welches der Materialfliessrichtung in der Werkzeugkavität entspricht. Gemäss vorliegender Ausführung sind das Gesamtvolumen der Werkzeugkavität abzüglich des Volumens der eingespritzten ersten Materialkomponente 7 sowie das Volumen der fliessfähigen Seele 7' zum Zeitpunk des Einspritzens der zweiten Materialkomponente 8 derart gewählt, dass die ins Kopfteil 2a verdrängte Seele 7' das Volumen des gesamten Kopfteils 2a einnimmt (siehe Figur 3). Somit besteht das Kopfteil 2a ausschliesslich aus der ersten Materialkomponente 7 (siehe Figur 4). Die zweite Materialkomponente 8 nimmt unter anderem den Platz der verdrängten Seele 7' im Griffteil 4a ein (Substitution), erstreckt sich bis zum Halsteil 3a und läuft im Halsteil 3a zungenförmig aus. Die zweite Materialkomponente 8 drückt demzufolge die fliessfähige Seele 7' an die Oberfläche des Körpers und ist folglich mit Ausnahme des Anspritzpunktes 10 vollständig vom Mantelkörper 7" und der fliessfähigen Seele 7' aus der ersten Materialkomponente 7 umgeben. Das Resultat des Einspritzens der zweiten Materialkomponente ist in den Figuren 3 und 4 gezeigt. In Figur 3 ist schematisch gezeigt, wie sich die verschiedenen Materialanteile verteilen beziehungsweise Anordnen. Die in Figur 2 gezeigte fliessfähige Seele 7' ist in Figur 3 wiederum zu erkennen. Wie beschrieben, ist fliessfähige Seele 7' in Richtung des Kopfteils 2a verdrängt. Ebenfalls zu erkennen ist die zweite Materialkomponente 8, welche an die Stelle der fliessfähigen Seele 7' tritt. Diese ist mit einer Schraffur angedeutet. In Figur 4 ist schlussendlich das finale Produkt zu erkennen, wie es materialmässig aufgeteilt ist. Nach dem Erstarren bilden der Mantelkörper 7" und die fliessfähige Seele 7' aus den vorherigen Prozessschritten eine Einheit aus der ersten Materialkomponente 7, die die zweite Materialkomponente 8 komplett umgibt. Die zweite Materialkomponente 8 ist schraffiert dargestellt.

Wie erwähnt, kann durch einen dritten Spritzgiessschritt nochmals eine begrenzte Menge der erste Materialkomponente 7 über den gemeinsamen Anspritzpunkt 10 eingespritzt werden, so dass die zweite Materialkomponente 8 auch im Bereich des Anspritzpunktes 10 von der ersten Materialkomponente 7 umgeben ist und insbesondere an keiner Stelle an die Oberfläche des Griffkörpers 1a tritt.

Gemäss der vorliegenden ersten Gestaltungsvariante können die erste und die zweite Materialkomponente 7, 8 aus einer Hartkomponente der oben beschriebenen Art sein. Um einen optischen Effekt zu erreichen, kann die erste Materialkomponente 7 transparent sein und die Zweite farbig beziehungsweise opak. Damit wird ein interessanter optischer Effekt erreicht. Um eine weiche Oberfläche zu erreichen kann die erste Materialkomponente 7 eine Weichkomponente, beispielsweise ein TPE sein. Die zweite Materialkomponente 8 kann eine Hartkomponente sein. Dabei bildet die Hartkomponente ein Element, das dem Griff Stabilität gibt.

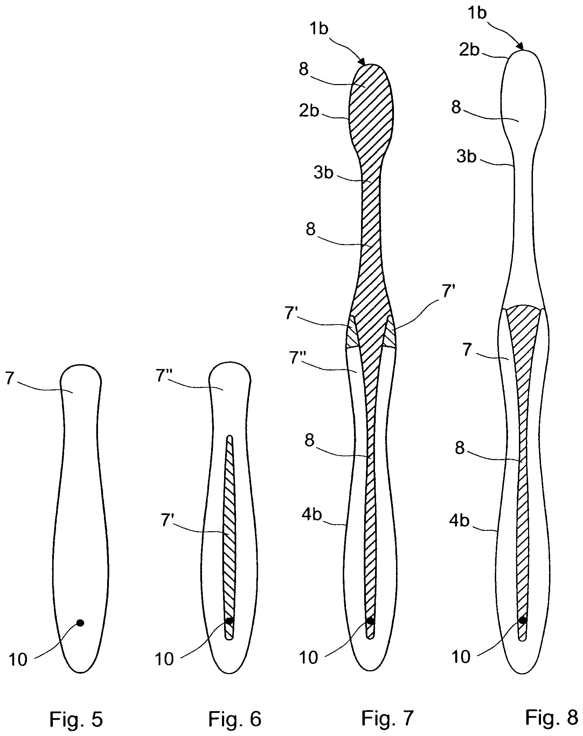

Die **Figuren 5 bis 8** zeigen rein schematisch die Herstellung eines Griffkörpers 1b gemäss einer zweiten Gestaltungsvariante. Zur Herstellung des Griffkörpers 1b in der zweiten Gestaltungsvariante wird in einem ersten Schritt in eine entsprechende Werkzeugkavität (nicht gezeigt) eine erste Materialkomponente 7 eingespritzt. Die Werkzeugkavität bzw. der herzustellende Griffkörper 1b ist ebenfalls ein Längsbauteil und weist einen Griffteil 4b, einen Halsteil 3b und einen Kopfteil 2b auf. Der Anspritzpunkt 10 ist im Griffteil 4b angeordnet. Die Werkzeugkavität wird in einem ersten Schritt nur teilweise mit der erste Materialkomponente 7 gefüllt, wobei bedingt durch die Anordnung des Anspritzpunktes 10 im Griffteil 4b wenigstens der Griffteil vollständig oder mindestens teilweise gefüllt wird. Die eingespritzte erste Materialkomponente 7 nimmt dabei die Kontur der Werkzeugkavität im Griffteil 4b an (siehe Figur 5). Die Figur 5 zeigt schematisch die Umrisskontur des Körpers, der im ersten Einspritzvorgang mit der ersten Materialkomponente 7 geformt wird. Der Kopfteil 2b und vorzugsweise auch der Halsteil 3b der Werkzeugkavität werden hingegen nicht mit der ersten Materialkomponente 7 gefüllt (vergleiche Figur 9).

Die eingespritzte erste Materialkomponente 7 kühlt im Anschluss an den ersten Spritzgiessschritt von der Kavitätenwand her zum Kern hin ab, wobei eine wärmere und noch fliessfähige Seele 7' verbleibt, welche von einem nicht mehr fliessfähigen Mantelkörper 7" umgeben ist. Dies ist schematisch in Figur 6 gezeigt. Neben der Umrisskontur des Körper, der im ersten Einspritzvorgang mit der ersten Materialkomponente 7 geformt wird, ist die fliessfähige Seele 7' schraffiert dargestellt. Auch der nicht mehr fliessfähige Mantelkörper 7" ist erkennbar. Im Vergleich zur ersten Gestaltungsvariante gemäss den Figuren 1 bis 4 ist hier der Abkühlungsprozess bereits weiter fortgeschritten und das Volumen der fliessfähigen Seele 7' ist entsprechend kleiner beziehungsweise die Wandstärke des nicht mehr fliessfähigen Mantelkörpers 7" grösser.

In einem zweiten Schritt wird durch denselben Anspritzpunkt 10 die zweite Materialkomponente 8 in eine Werkzeugkavität des Spritzgiesswerkzeuges gespritzt. Das Resultat dieses Schritts ist in den Figuren 7 und 8 dargestellt. Die zweite Materialkomponente 8 wird in den in Figur 5 und 6 gezeigten Körper über den Anspritzpunkt 10 eingespritzt und verdrängt die fliessfähige Seele 7' in Richtung Kopfteil 2b, welches der Materialfliessrichtung in der Werkzeugkavität entspricht. Gemäss der vorliegenden Ausführungsform ist das Gesamtvolumen der Werkzeugkavität abzüglich der eingespritzten ersten Materialkomponente 7 sowie das Volumen der fliessfähigen Seele 7' zum Zeitpunk des Einspritzens der zweiten Materialkomponente 8 derart gewählt, dass die verdrängte Seele 7' im vorderen Griffteil 4b oder im Halsteil 3b ausläuft und lediglich eine die zweite Materialkomponente 8 umgebende Mantelfläche ausbildet (siehe Figur 7). Das Volumen der Seele 7' ist hier kleiner als das Volumen des Kopfteils 2b. Daher bricht die zweite Materialkomponente 8 im vorderen Abschnitt des Griffteils 4b oder des Halsteils 3b aus der Ummantelung durch die erste Materialkomponente 7 aus und dringt bis an die Oberfläche bzw. bis zur Kavitätenwand vor. Die nach vorne ausgebrochene zweite Materialkomponente 8 füllt nun das komplette Volumen des Kopfteils 2b und vorzugsweise auch des Halsteils 3b komplett oder zu Teilen aus (siehe Figur 8). Somit besteht das Kopfteil 2b und ggf. das Halsteil 3b ausschliesslich aus der zweiten Materialkomponente 8. Die zweite Materialkomponente 8 nimmt im Weiteren den Platz der verdrängten Seele 7' im Griffteil 4b ein, wird dort jedoch noch von einem Mantelkörper 7" aus der ersten Materialkomponente 7 umgeben. Die zweite Materialkomponente 8 des Griffkörpers 1b ist nicht mehr vollständig vom Mantelkörper 7" der ersten Materialkomponente 7 umgeben. Das Resultat des Einspritzens der zweiten Materialkomponente ist in den Figuren 7 und 8 gezeigt. In Figur 7 ist schematisch gezeigt, wie sich die verschiedenen Materialanteile verteilen beziehungsweise Anordnen. Die in Figur 6 gezeigte fliessfähige Seele 7' ist in Figur 7 wiederum zu erkennen. Sie ist wie beschrieben in Richtung des Kopfteils 2a verdrängt, jedoch nur bis an den Anschluss an die Ausbruchstelle der zweiten Materialkomponente 8 aus dem nicht mehr fliessfähigen Mantelkörper 7". Ebenfalls zu erkennen ist die zweite Materialkomponente 8, welche an die Stelle der fliessfähigen Seele 7' tritt und dann aus dem nicht mehr fliessfähigen Mantelkörper 7" austritt und den Kopfteil 2b bildet. Diese zweite Komponente ist ebenfalls mit einer Schraffur angedeutet. In Figur 8 ist schlussendlich das finale Produkt zu erkennen, wie es materialmässig aufgeteilt ist. Nach dem Erstarren bilden der Mantelkörper 7" und die fliessfähige Seele 7' aus den vorherigen Prozessschritten eine Einheit aus der ersten Materialkomponente 7, die die zweite Materialkomponente 8 umgibt. Die zweite Materialkomponente ist schraffiert dargestellt, solange sie nicht an der Oberfläche des Griffkörpers 1b liegt, anschliessend ist sie nicht mehr schraffiert.

Wie erwähnt, kann durch einen dritten Spritzgiessschritt nochmals eine begrenzte Menge der erste Materialkomponente 7 über den gemeinsamen Anspritzpunkt 10 eingespritzt werden, so dass die zweite Materialkomponente 8 auch im Bereich des Anspritzpunktes 10 von der ersten Materialkomponente 7 umgeben ist.

Gemäss der vorliegenden zweiten Gestaltungsvariante können die erste und die zweite Materialkomponente 7, 8 aus einer Hartkomponente der oben beschriebenen Art sein. Um einen optischen Effekt zu erreichen, kann die erste Materialkomponente 7 transparent sein und die Zweite farbig beziehungsweise opak oder umgekehrt. Damit wird ein interessanter optischer Effekt erreicht. Um eine weiche Oberfläche im Griffbereich zu erreichen, kann die erste Materialkomponente 7 eine Weichkomponente, beispielsweise ein TPE sein, und die zweite Materialkomponente 8 eine Hartkomponente. Dabei bildet die Hartkomponente ein Element, das dem Griff Stabilität gibt und schlussendlich auch mindestens teilweise das Halsteil 3b und das Kopfteil 2b bildet und dementsprechend die Funktionalität gewährleistet.

Grundsätzlich kann mathematisch berechnet werden, ob die erste oder die zweite Gestaltungsvariante realisiert wird. Die Parameter, die für die Berechnung verwendet werden, sind das Gesamtvolumen der Werkzeugkavität, das Gesamtvolumen der ersten Materialkomponente sowie das Volumen der fliessfähigen Seele. Dabei ist das Volumen der fliessfähigen Seele zeitabhängig. D.h., je länger zwischen den Einspritzzyklen gewartet bzw. gekühlt wird, desto kleiner wird dieses Volumen, da es auskühlt, d.h. sich verfestigt und nicht mehr fliessfähig ist. In der Beurteilung bezüglich Gestaltungsvariante wird dann jeweils das Restvolumen in der Werkzeugkavität mit dem Volumen der fliessfähigen Seele verglichen.

Die erste Gestaltungsvariante, die in den Figuren 1 bis 4 gezeigt ist, ergibt sich aufgrund folgendem Verhältnis: das Gesamtvolumen der Werkzeugkavität abzüglich des Gesamtvolumens der eingespritzten ersten Materialkomponente ist kleiner als die durch die zweite Materialkomponente verdrängte, fliessfähige Seele.

Die zweite Gestaltungsvariante, die in den Figuren 5 bis 8 gezeigt ist, ergibt sich aufgrund folgendem Verhältnis: das Gesamtvolumen der Werkzeugkavität abzüglich des Gesamtvolumens der eingespritzten ersten Materialkomponente ist grösser als die durch die zweite Materialkomponente verdrängte, fliessfähige Seele.

Im Vergleich der Figuren 4 und 6 ist der Unterschied der beiden Gestaltungsvarianten in Bezug auf die Volumenverhältnisse erkennbar. Bei der ersten Gestaltungsvariante nimmt die fliessfähige Seele 7' mehr Platz ein als bei der zweiten Gestaltungsvariante. Das heisst, es wird mehr Material substituiert, weil das "fliessfähige Volumen" noch grösser ist.

Die **Figur 9** zeigt die Werkzeugkavität 21 eines Spritzgiesswerkzeuges nach vollzogenem ersten Spritzgiessvorgang mit Blick von der Formtrennung auf den Formeinsatz. Im Prinzip entspricht dies einem Blick auf die Werkzeugkavität 21 bei geöffnetem Spritzgiesswerkzeug nach dem ersten Spritzgiessvorgang. Die Werkzeugkavität 21 weist eine in einem ersten Spritzgiessschritt eingespritzte erste Materialkomponente 7 auf, welche der dargestellten Materialkomponente 7 gemäss den Figuren 1 und 5 entspricht. Dieser Körper ist schraffiert dargestellt. Dabei ist klar zu erkennen, dass die Werkzeugkavität 21 im ersten Spritzgiessvorgang nicht komplett gefüllt wird. Mindestens ein Teilbereich der Werkzeugkavität 21 bleibt frei. Die Kontur der Werkzeugkavität 21 ist zu erkennen. Die nicht schraffierten Bereiche sind noch nicht mit Material gefüllt. Weiter ist die Materialfliessrichtung M angedeutet. Sie ist vom Anspritzpunkt 10 her in Richtung des Kopfteils 2a gerichtet. Nachdem der Griffteil 4a gefüllt ist, füllt sich auch der Halsteil 3a und der Kopfteil 2a.

Die **Figur 10** zeigt eine Draufsicht auf den Griffkörper 1a gemäss der ersten Gestaltungsvariante nach Figur 4. Dieser ist hergestellt gemäss den in Figur 1 bis 4 gezeigten Schritten. Im Kopfteil 2a des Griffkörpers 1a sind Borstenaufnahmelöcher 5a angeordnet, in welche die Borsten der Zahnbürste eingebracht werden. Die Borstenaufnahmelöcher 5a in der vorliegenden Form sind jedoch kein zwingendes Erfindungsmerkmal. Schraffiert dargestellt ist die im Griffkörper 1a liegende zweite Materialkomponente 8, die komplett von der ersten Materialkomponente 7 umgeben ist. Weiter läuft die zweite Materialkomponente 8 zungenförmig aus, d.h. sie endet nicht abrupt.

Die **Figur 11** zeigt den Griffkörper 1a gemäss Figur 10 in einer Seitenansicht. Aus der Seitenansicht ist insbesondere auch die Formtrennlinie 12 sichtbar, entlang welcher die Werkzeugkavität 21 zur Entformung des Spritzgussteils geöffnet wurde. Die Formtrennlinie 12 ist in Draufsicht des Griffkörpers 1a seitlich angeordnet. Die Formtrennlinie 12 läuft unterbruchlos um den ganzen Körper herum. Es ist zu erkennen, dass die zweite Materialkomponente 8 auf beiden Seiten der Formtrennlinie 12 angeordnet ist, also über diese hinweg verläuft. In der Seitenansicht ist gut erkennbar, wie die Form der zweiten Materialkomponente 8 der Geometrie der Aussenkontur mit Abstand, welche der Wandstärke entspricht, folgt und auch das zungenförmige Auslaufen der zweiten Materialkomponente 8 ist gut erkennbar.

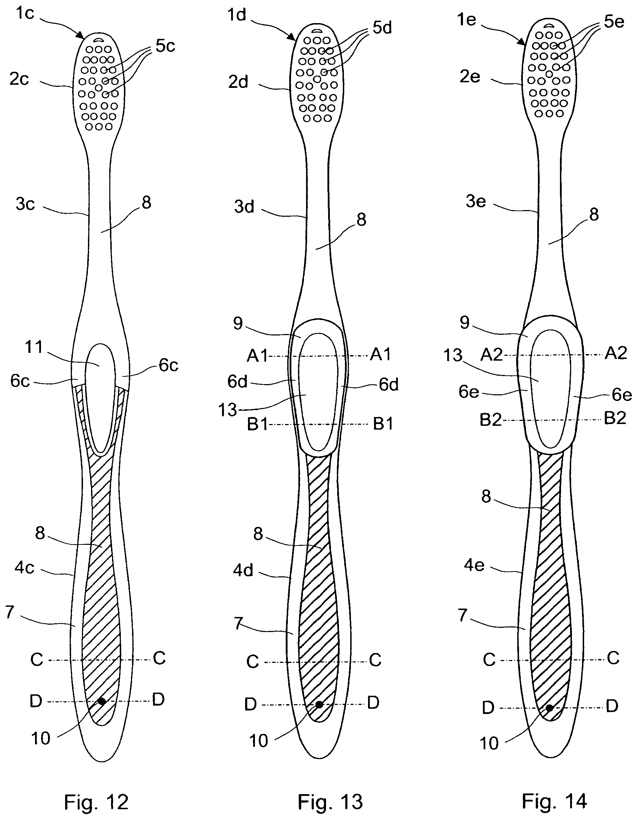

Die **Figuren 12 bis 14** zeigen drei, gemäss einer Ausführungsart der zweiten Gestaltungsvariante hergestellte Griffkörper 1c, 1d, 1e in Draufsicht. Der in Figur 12 gezeigte Griffkörper 1c kann als eigenständiger Griffkörper verwendet werden, ohne dass die Applikation einer weiteren Materialkomponente nötig ist, oder er kann für die Griffkörper 1d und 1e als Basiskörper dienen. Die Griffkörper 1c, 1d, 1e enthalten ebenfalls einen Kopfteil 2c, 2d, 2e, einen Halsteil 3c, 3d, 3e sowie einen Griffteil 4c, 4d, 4e. Der Anspritzpunkt 10 ist ebenfalls im Griffteil 4c, 4d, 4e angeordnet, vorzugsweise auf der Rückseite des Griffteils 4c, 4d, 4e.

Die vorliegende Ausführungsform der zweiten Gestaltungsvariante zeichnet sich durch eine zum Halsteil 3c, 3d, 3e angeordnete Durchgangsöffnung 11 im vorderen Griffteil 4c, 4d, 4e aus. Die Durchgangsöffnung 11 erstreckt sich von der Vorder- zur Rückseite und wird von zwei seitlichen Teilarmen 6c, 6d, 6e begrenzt. Die Griffkörper 1c, 1d, 1e, beziehungsweise deren Kopfteil 2c, 2d, 2e, enthalten Borstenaufnahmelöcher 5c, 5d, 5e zur Aufnahme von Borsten, welche mittels Ankerstanzen in den Borstenaufnahmelöchern 5c, 5d, 5e befestigt werden. Die Borstenaufnahmelöcher in der vorliegenden Form sind jedoch auch hier kein zwingendes Erfindungsmerkmal.

Die Herstellung der Griffkörper 1c, 1d und 1e erfolgt grundsätzlich in analoger Weise wie die Gestaltungsvariante gemäss den Figuren 5 bis 8, nur dass die Werkzeugkavität nun noch einen Einsatzkern beinhaltet, welcher die Durchgangsöffnung des zu produzierenden Griffkörpers definiert, und um welche die Materialkomponenten 7, 8 unter Aufteilung in zwei Teilarme 6c, 6d, 6e und nachfolgender Wiedervereinigung in Materialfliessrichtung fliessen.

Die erste Materialkomponente 7 bildet sowohl im Griffteil 4c, 4d, 4e und wenigstens teilweise in einem, an das Griffteil 4c, 4d, 4e anschliessenden Teilabschnitt der Teilarme 6c, 6d, 6e einen Mantelkörper aus, welcher einen Kern aus der zweiten Materialkomponente 8 umschliesst. Dieser Materialkern trennt sich ausgehend vom Griffteil 4c, 4d, 4e ebenfalls in zwei Teilarme auf, welche um die Durchgangsöffnung geführt sind (siehe Figur 12). Die Aufteilung passiert, weil die Kühlung von der Kavitätenwand her auch für den Einsatzkern gilt und sich so die fliessfähige Seele auch in den Teilarmen 6c, 6d, 6e ausbreitet.

Die zweite Materialkomponente 8 nimmt also auch hier den Platz der verdrängten Seele 7' im Griffteil 4c, 4d, 4e ein, wird dort jedoch noch von einem Mantelkörper aus der ersten Materialkomponente 7 umgeben. Wie erwähnt, kann durch einen dritten Spritzgiessschritt nochmals eine begrenzte Menge der ersten Materialkomponente 7 über den gemeinsamen Anspritzpunkt 10 eingespritzt werden, so dass die zweite Materialkomponente 8 auch im Bereich des Anspritzpunktes 10 von der ersten Materialkomponente 7 umgeben ist.

Die zweite Materialkomponente 8 des Griffkörpers 1c, 1d, 1e gemäss Figur 12, 13 und 14 bricht im Bereich der beiden Teilarme aus der Ummantelung durch die erste Materialkomponente 7 aus und tritt vollumfänglich an die Oberfläche des Griffkörpers 1c, 1d, 1e. Entsprechend werden der anschliessende Halsteil 3c, 3d, 3e und der Kopfteil 2c, 2d, 2e vollständig durch die zweite Materialkomponente 8 ausgebildet.

Der Ausbruch der zweiten Materialkomponente 8 im Bereich der Teilarme 6c ist bewusst gewählt. Wie aus der Ausführungsform gemäss Figur 13 und 14 ersichtlich ist, wird der Bereich der Durchgangsöffnung 11 zwecks Ausbildung einer Daumenauflage 13 mindestens teilweise mit einer dritten Materialkomponente 9 umspritzt. Die Umspritzung kann eine Überdeckung der Teilarme 6c zur Durchgangsöffnung 11 hin (siehe Figur 13) oder eine Überdeckung rund um den Griffkörper 1e im Bereich der Durchgangsöffnung sein (siehe Figur 14). Die Umspritzung mit der dritten Materialkomponente 9 hat somit zwei Funktionen. Zum einen dient sie zur Ausbildung einer Daumenauflage 13 als Auflagefläche und zum anderen dient sie der Überdeckung der Übergangsbereichs zwischen erster und zweiter Materialkomponente im Bereich der Oberfläche. In der in Figur 12 gezeigten Variante wird die Geometrie der Durchgangsöffnung 11 beziehungsweise die Geometrie um die Durchgangsöffnung 11 herum so gewählt, dass diese Geometrien eine Daumenauflage bilden. Falls die Durchgangsöffnung 11 mit einer dritten Materialkomponente versehen wird, muss die Geometrie des darunter liegenden Körpers nicht zwingend so ausgestaltet sein.

Die Position der Ausbruchstelle ist unter anderem aufgrund von Schwankungen der Eigenschaften der Kunststoffe, des Wärmehaushalts in der Spritzgiessform bzw. im Heisskanalsystem und der Materialdosierung der zweiten Materialkomponente 8 und der ersten Materialkomponente 7 einer gewissen Toleranz unterworfen. Die Ausbruchstelle kann in Richtung der Längsachse variieren. Auch die Position in den Teilarmen kann ungleich sein. Deshalb ist es aus ästhetischen Gründen wichtig, dass dieser Übergangsbereich z. B. mit einer dritten Materialkomponente 9 überdeckt werden kann.

Gemäss der vorliegenden Ausführungsart der zweiten Gestaltungsvariante können die erste und die zweite Materialkomponente 7, 8 aus einer Hartkomponente der oben beschriebenen Art sein. Es kann auch vorgesehen sein, dass die zweite Materialkomponente 8 aus einer Hartkomponente und die erste Materialkomponente 7 aus einem thermoplastischen Elastomer der oben beschriebenen Art ist. Um einen optischen Effekt zu erreichen, kann die erste Materialkomponente 7 transparent sein und die zweite Materialkomponente 8 farbig beziehungsweise opak oder umgekehrt. Damit wird ein interessanter optischer Effekt erreicht. Um eine weiche Oberfläche im Griffbereich zu erreichen kann die erste Materialkomponente 7 eine Weichkomponente, beispielsweise ein TPE sein, und die zweite Materialkomponente 8 eine Hartkomponente. Dabei bildet die Hartkomponente ein Element, das dem Griff Stabilität gibt und schlussendlich auch mindestens teilweise das Halsteil 3b und das Kopfteil 2b bildet und dementsprechend die Funktionalität gewährleistet.

In den Figuren 12 bis 14 ist die zweite Materialkomponente 8, welche innerhalb der ersten Materialkomponente 7 liegt, schraffiert dargestellt. Das Hals- 3c, 3d, 3e und Kopfteil 2c, 2d, 2e besteht ebenfalls aus der zweiten Materialkomponente 8, an dieser Position liegt diese jedoch an der Oberfläche des Griffkörpers 1c, 1d, 1e und ist deshalb nicht gestrichelt dargestellt.

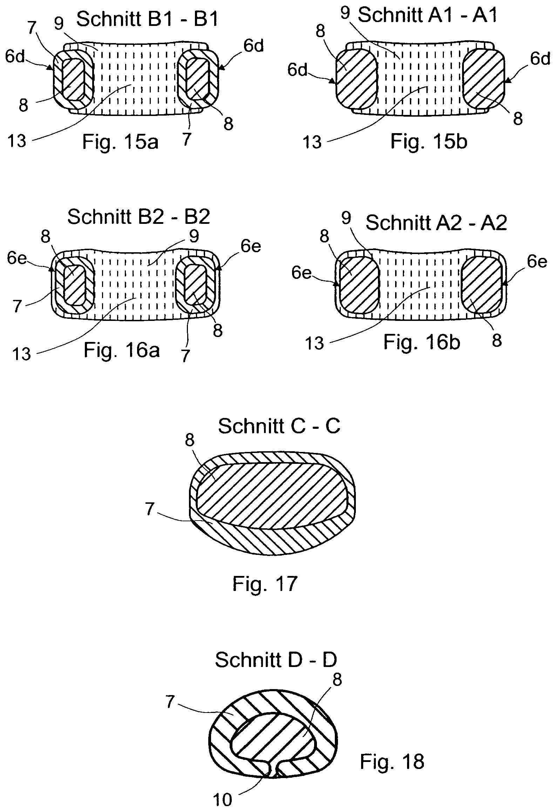

Die **Figur 15a** zeigt einen Querschnitt durch den Griffkörper 1d gemäss Figur 13 entlang der Linie B1-B1 im griffseitigen Bereich der Daumenauflage 13. Die beiden Teilarme 6d weisen einen Kern aus der zweiten Materialkomponente 8 auf, welcher von der ersten Materialkomponente 7 vollständig ummantelt ist. Die der Durchgangsöffnung 11 zugewandte Aussenseite der Teilarme 6d ist ferner mit einer dritten Materialkomponente 9 überzogen. Dabei ist die Durchgangsöffnung komplett mit der dritten Materialkomponente 9 gefüllt.

Die **Figur 15b** zeigt einen Querschnitt durch den Griffkörper 1d gemäss Figur 13 entlang der Linie A1-A1 im kopfseitigen Bereich der Daumenauflage. Auf dieser Höhe des Griffkörpers 1d ist die zweite Materialkomponente 8 in Materialfliessrichtung bzw. in Richtung Kopfteil 2d bereits vollständig aus der Ummantelung durch die erste Materialkomponente 7 ausgebrochen und füllt das Volumen der Teilarme 6d vollständig aus. Die der Durchgangsöffnung 11 zugewandte Aussenseite der Teilarme 6d ist auch hier mit einer dritten Materialkomponente 9 überzogen und die Durchgangsöffnung ist komplett mit der dritten Materialkomponente 9 gefüllt. Im Vergleich der Figuren 15a und 15b zeigt sich, dass sich die Zusammensetzung der Querschnitte in Bezug auf die Materialkomponenten beziehungsweise die Querschnittsflächen der Materialkomponenten verändert. Während in Figur 15a drei Materialkomponenten im Querschnitt sichtbar sind, so sind es in Figur 15b lediglich noch zwei Materialkomponenten. Der Anteil der ersten Materialkomponente 7 am Querschnitt nimmt in Richtung des Kopfteils des Griffkörpers ab, bis er schlussendlich bei null ist. Dementsprechend wird die zweite Materialkomponente 8 im Griffteil beziehungsweise griffteilseitig von der ersten Materialkomponente 7 umschlossen, während sie dann kopfteilseitig in gewissen Oberflächen-Teilen von der dritten Materialkomponente 9 bedeckt wird und teilweise frei liegt.

Die **Figur 16a** zeigt einen Querschnitt durch den Griffkörper 1e gemäss Figur 14 entlang der Linie B2-B2 im griffseitigen Bereich der Daumenauflage 13. Die beiden Teilarme 6e weisen einen Kern aus der zweiten Materialkomponente 8 auf, welcher von der ersten Materialkomponente 7 vollständig ummantelt ist. Die Teilarme 6e sind als solche vollständig mit einer dritten Materialkomponente 9 überzogen und die Durchgangsöffnung ist komplett mit der dritten Materialkomponente 9 gefüllt. Damit ist auch die Aussenseite der Teilarme 6d vollumfänglich mit einer dritten Materialkomponente 9 überzogen. Auf diese Weise kann die Ausbruchstelle der zweiten Materialkomponente 8 aus der ersten Materialkomponente 7 komplett überdeckt werden.

Die **Figur 16b** zeigt einen Querschnitt durch den Griffkörper 1e gemäss Figur 14 entlang der Linie A2-A2 im kopfseitigen Bereich der Daumenauflage 13. Auf dieser Höhe des Griffkörpers 1d ist die zweite Materialkomponente 8 in Materialfliessrichtung bzw. in Richtung Kopfteil 2d bereits vollständig aus der Ummantelung durch die erste Materialkomponente 7 ausgebrochen und füllt das Volumen der Teilarme 6d vollständig aus. Die Teilarme 6e sind als solche vollständig mit einer dritten Materialkomponente 9 überzogen und die Durchgangsöffnung ist komplett mit der dritten Materialkomponente 9 gefüllt. Damit ist auch die Aussenseite der Teilarme 6d vollumfänglich mit einer dritten Materialkomponente 9 überzogen. Damit kann die Ausbruchstelle der zweiten Materialkomponente 8 aus der ersten Materialkomponente 7 komplett überdeckt werden. Auf diese Weise wird ein Griffkörper mit regelmässigem Aussehen geschaffen, da die Ausbruchstelle, welche wie beschrieben mit einer Toleranz behaftet ist, überdeckt wird.

Im Vergleich der Figuren 16a und 16b zeigt sich, dass sich die Zusammensetzung der Querschnitte in Bezug auf die Materialkomponenten beziehungsweise die Querschnittsflächen der Materialkomponenten verändert. Während in Figur 16a drei Materialkomponenten im Querschnitt sichtbar sind, sind es in Figur 16b lediglich noch zwei Materialkomponenten. Der Anteil der ersten Materialkomponente 7 am Querschnitt nimmt in Richtung des Kopfteils des Griffkörpers ab, bis er schlussendlich bei null ist. Dementsprechend wird die zweite Materialkomponente 8 im Griffteil beziehungsweise griffteilseitig von der ersten Materialkomponente 7 umschlossen, während sie dann kopfteilseitig von der dritten Materialkomponente 9 umschlossen wird.

Die in den Figuren gezeigte Applikation einer dritten Materialkomponente 9 kann verschieden erfolgen. In den Figuren ist gezeigt, dass sich die dritte Materialkomponente 9 durch eine Durchgangsöffnung 11 am Körper angebracht ist und diesen mindestens in gewissen Ausführungsformen auch umschliesst. Die dritte Materialkomponente 9 kann selbstverständlich auch appliziert werden, ohne dass sie durch eine Durchgangsöffnung 11 geführt ist. Mittels Materialschlusseigenschaften kann die dritte Materialkomponente 9 beispielsweise auf die Oberfläche der bestehenden Teile appliziert werden. Weiter ist es auch möglich durch geometrische Körpergestaltungen Formschlüsse zu ermöglichen, die die Applikation auf der Oberfläche ermöglichen.

Weiter kann die dritte Materialkomponente in allen Teilen des Griffkörpers d.h. im Kopf-, Hals- und/oder Griffteil angeordnet sein. Die dritte Materialkomponente kann so beispielsweise im Kopfteil einer Zahnbürste dazu dienen, Zungenreiniger oder weichelastische Massage- und Reinigungselemente auszubilden, wie vorgängig bereits beschrieben. Weiter kann die dritte Materialkomponente für ergonomische oder designtechnische Aspekte verwendet werden. Selbstverständlich können die verschiedenen Anwendungen kombiniert werden.

Die **Figur 17** zeigt einen Querschnitt durch die Griffkörper 1c, 1d und 1e gemäss den Figuren 10, 12, 13, 14 und 19 entlang der Linie C-C im hinteren Endabschnitt des Griffteils 4c, 4d, 4e. Der Griffteil 4c, 4d, 4e weist einen Kern aus der zweiten Materialkomponente 8 auf, welcher von der ersten Materialkomponente 7 vollständig ummantelt ist.

Die **Figur 18** zeigt einen Querschnitt durch die Griffkörper 1c, 1d und 1e gemäss den Figuren 10, 12, 13, 14 und 19 entlang der Linie D-D im hinteren Endabschnitt des Griffteils 4c, 4d, 4e auf Höhe des Anspritzpunktes 10. Der Griffteil 4c, 4d, 4e weist einen Kern aus der zweiten Materialkomponente 8 auf, welcher von der ersten Materialkomponente 7 ummantelt ist. Im Anspritzpunkt 10 ist ein Durchbruch durch die Ummantelung ausgebildet, durch welchen die zweite Materialkomponente 8 bis zur Oberfläche reicht. Dieser Durchbruch stellt den vorzugsweise zylindrischen Anspritzpunkt dar. Die Figur 18 zeigt, wie der Anspritzpunkt aussieht, wenn die erste Materialkomponente 7 kein zweites Mal angespritzt wird. Wenn wie bereits beschrieben die erste Materialkomponente 7 nach dem Einspritzen der zweiten Materialkomponente 8 nochmals angespritzt wird, kann erreicht werden, dass der zylindrische Durchbruch durch den Mantelkörper wiederum mit Material der ersten Materialkomponente 7 verschlossen wird. Dann würde die zweite Materialkomponente 8 nicht bis an die Oberfläche reichen.

In den Schnittdarstellungen der Figuren 15 bis 18 sowie 22 bis 24 ist erkennbar, wie sich die Wandstärke des Mantelkörpers aus der ersten Materialkomponente 7 ausbildet. Diese hat eine Stärke von 0.5 mm - 5 mm und insbesondere von 1.5 mm - 3 mm. Die Wanddicke ist grundsätzlich von der Kühlung abhängig.

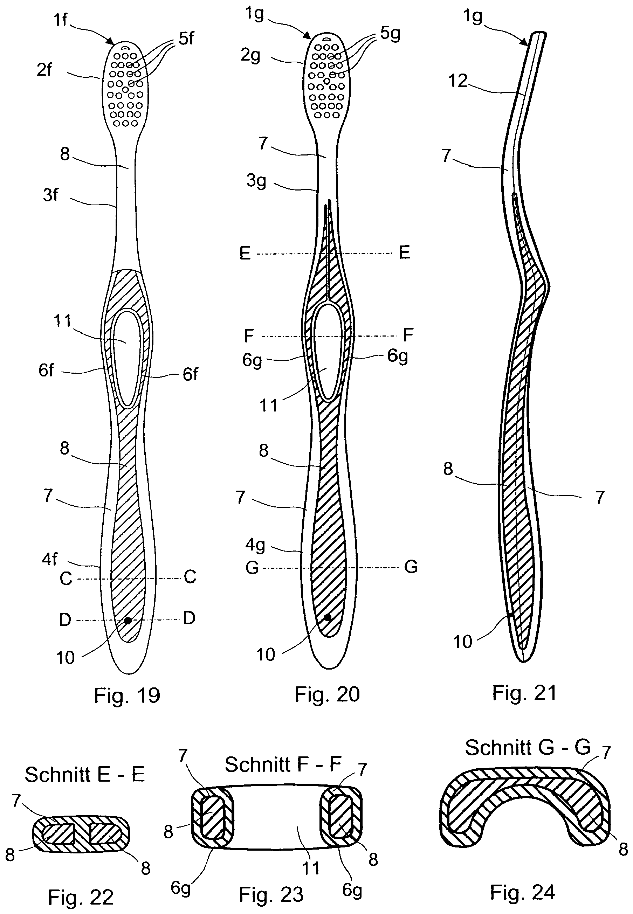

Die **Figur 19** zeigt eine weitere Ausführungsart der zweiten Gestaltungsvariante. Der Griffkörper 1f enthält ebenfalls einen Kopfteil 2f, einen Halsteil 3f sowie einen Griffteil 4f. Der Anspritzpunkt 10 im Griffteil 4f ist ebenfalls sichtbar. Weiter zeichnet sich die Ausführungsart durch eine zum Halsteil 3f angeordnete Durchgangsöffnung 11 im vorderen Griffteil 4f aus. Die Durchgangsöffnung erstreckt sich von der Vorder- zur Rückseite und wird von zwei seitlichen Teilarmen eingegrenzt. Der Griffkörper 1f enthält weiter Borstenaufnahmelöcher 5f zur Aufnahme von Borsten. Die Borstenaufnahmelöcher 5f, 5g in der vorliegenden Form sind jedoch ebenfalls kein zwingendes Erfindungsmerkmal.

Die Herstellung des Griffkörpers 1 f erfolgt grundsätzlich in analoger Weise wie die zweite Gestaltungsvariante gemäss den Figuren 5 bis 8, nur dass die Werkzeugkavität nun noch einen Einsatzkern beinhaltet, welcher die Durchgangsöffnung 11 des zu produzierenden Griffkörpers 1f definiert, und um welche die Materialkomponenten 7, 8 unter Aufteilung in zwei Teilarme 6f und nachfolgender Wiedervereinigung in Materialfliessrichtung fliessen.

Die erste Materialkomponente 7 bildet sowohl im Griffteil 4f als auch in den Teilarmen 6f einen Mantelkörper aus, welcher einen Materialkern aus der zweiten Materialkomponente 8 umschliesst. Der Materialkern trennt sich ausgehend vom Griffteil 4f in Richtung Kopfteil 2f ebenfalls in zwei Teilarme auf, welche um die Durchgangsöffnung 11 geführt sind. Die zweite Materialkomponente 8 nimmt also auch hier den Platz der verdrängten Seele 7' im Griffteil 4f ein, wird dort jedoch noch von einem Mantelkörper aus der ersten Materialkomponente 7 umgeben.

Wie erwähnt, kann durch einen dritten Spritzgiessschritt nochmals eine begrenzte Menge der ersten Materialkomponente 7 über den gemeinsamen Anspritzpunkt 10 eingespritzt werden, so dass die zweite Materialkomponente 8 auch im Bereich des Anspritzpunktes 10 von der ersten Materialkomponente 7 umgeben ist.

Die beiden Teilarme der zweite Materialkomponente 8 des Griffkörpers 1f vereinigen sich gemäss der Ausführungsform nach Figur 19 im Anschluss an die Durchgangsöffnung 11 in Richtung Kopfteil 2f wieder, so dass sich in Richtung Kopfteil 2f ein gemeinsamer, von der ersten Materialkomponente 7 umhüllter Strang fortpflanzt. Die zweite Materialkomponente 8 bricht hier erst im Anschluss an die Durchgangsöffnung 11, nach der Wiedervereinigung der Teilarme und der Materialkerne, in Richtung Kopfteil 2f aus der Ummantelung durch die erste Materialkomponente 7 aus und tritt vollumfänglich an die Oberfläche des Griffkörpers 1f. Dies kann z.B. vor oder im Halsteil 3f geschehen. Entsprechend werden der anschliessende Halsteil 3f oder zumindest ein Abschnitt davon sowie der Kopfteil 2f vollständig durch die zweite Materialkomponente 8 ausgebildet.

Verglichen mit Figur 12 ist es so, dass die Position der Ausbruchstelle der zweiten Materialkomponente 8 aus der ersten Materialkomponente 7 gegen das Kopfteil 2f verschoben ist. Im vorliegenden Fall hängt die Position der Ausbruchstelle von der Materialmenge ab, die im ersten Spritzgiessschritt in die Werkzeugkavität eingespritzt wird. Da im Griffkörper 1f aus Figur 19 die Ausbruchstelle näher beim Kopfteil 2f liegt und der Materialkern aus der zweiten Materialkomponente 8 identisch ist mit jenem aus Figur 12, lässt sich im Vergleich mit Figur 12 sagen, dass beim Körper gemäss Figur 19 im ersten Spritzgiessvorgang mehr Material in die Werkzeugkavität eingebracht worden ist.

Weiter kann die Ausbruchstelle der zweiten Materialkomponente 8 aus der ersten Materialkomponente 7 durch die Kühlzeit bzw. der Zeit zwischen dem Einspritzen der ersten Materialkomponente 7 und der zweiten Materialkomponente 8 verändert werden. Wird ein identischer Griffkörper verwendet und von der ersten Materialkomponente 7 gleich viel Menge eingespritzt, so ist die Ausbruchstelle bei kurzer Kühlzeit näher beim Kopfteil als bei langer Kühlzeit. Dies deshalb, weil bei kurzer Kühlzeit die zweite Materialkomponente viel Material im Griffteil substituiert und weniger von der zweite Materialkomponente in die freien Teile der Werkzeugkavität fliessen, weil bereits die erste Materialkomponente dorthin verdrängt worden ist. Bei langer Kühlzeit ist im Griffteil nur noch wenig fliessfähige Seele 7' vorhanden, was mit sich bringt, dass die zweite Materialkomponente 8 wenig Material im Griff substituiert und hauptsächlich die freie Werkzeugkavität füllt, weil generell sehr wenig Material der ersten Materialkomponente 7 noch verschoben wird. Was sich aufgrund dieser Überlegungen auch zeigt, ist die Tatsache dass die erste Gestaltungsvariante fliessend in die zweite Gestaltungsvariante übergeht, und alles im Wesentlichen von der Kühlzeit abhängt. Generell ist es so, dass das Gesamtvolumen immer gleich ist, das heisst gesamthaft bringen die erste und die zweite Materialkomponente 7, 8 zusammen immer gleich viel Material in die Werkzeugkavität. Im vorliegenden Fall sind sogar die Materialanteile immer gleich gross. Was sich jeweils verändert, ist die Materialverteilung im Griffkörper.

Im Spritzgiessprozess eines Griffkörpers nach der ersten Gestaltungsvariante beträgt die Kühlzeit nach dem Einbringen der ersten Materialkomponente 7 vor dem Einbringen der zweiten Materialkomponente 8 zwischen 8 und 20 Sekunden. Bei der zweiten Gestaltungsvariante beträgt die Kühlzeit zwischen 20 und 35 Sekunden.

Die beiden Materialkomponenten 7, 8 können gemäss dieser Ausführungsform aus einer Hartkomponente der oben beschriebenen Art sein. Es kann auch vorgesehen sein, dass die zweite Materialkomponente 8 aus einer Hartkomponente und die erste Materialkomponente 7 aus einem thermoplastischen Elastomer der oben beschriebenen Art ist oder umgekehrt. Um einen optischen Effekt zu erreichen, kann die erste Materialkomponente 7 transparent sein und die zweite Materialkomponente 8 farbig beziehungsweise opak oder umgekehrt sein. Damit wird ein interessanter optischer Effekt erreicht. Um eine weiche Oberfläche im Griffbereich zu erreichen, kann die erste Materialkomponente 7 eine Weichkomponente, beispielsweise ein TPE sein, und die zweite Materialkomponente 8 eine Hartkomponente. Dabei bildet die Hartkomponente ein Element, das dem Griff Stabilität gibt und schlussendlich auch mindestens teilweise das Halsteil 3b und das Kopfteil 2b bildet und dementsprechend die Funktionalität gewährleistet.

In der Figur 19 ist die zweite Materialkomponente 8, welche innerhalb der ersten Materialkomponente 7 liegt, schraffiert dargestellt. Das Kopfteil 2f und mindestens teilweise auch das Halsteil 3f bestehen aus der zweiten Materialkomponente 8. An dieser Position liegt diese jedoch an der Oberfläche des Griffkörpers 1g und ist deshalb nicht gestrichelt dargestellt.

Die **Figuren 20 und 21** zeigt eine weitere Ausführungsart von Griffkörpern 1g gemäss der ersten Gestaltungsvariante. Der Griffkörper 1g enthält ebenfalls einen Kopfteil 2g, einen Halsteil 3g sowie einen Griffteil 4g. Der Anspritzpunkt 10 ist ebenfalls im Griffteil 4g angeordnet. Die vorliegende Ausführungsart zeichnet sich ebenfalls durch eine zum Halsteil 3g angeordnete Durchgangsöffnung 11 im vorderen Griffteil 4g aus. Die Durchgangsöffnung 11 erstreckt sich von der Vorderzur Rückseite und wird von zwei seitlichen Teilarmen 6g eingegrenzt. Der Griffkörper 1d enthält Borstenaufnahmelöcher 5g zur Aufnahme von Borsten. Die Borstenaufnahmelöcher 5g in der vorliegenden Form sind jedoch ebenfalls kein zwingendes Erfindungsmerkmal.

Die Herstellung des Griffkörpers 1g erfolgt grundsätzlich in analoger Weise wie die erste Gestaltungsvariante gemäss den Figuren 1 bis 4, nur dass die Werkzeugkavität nun noch einen Einsatzkern beinhaltet, welcher die Durchgangsöffnung 11 des zu produzierenden Griffkörpers 1g definiert, und um welche die Materialkomponenten 7, 8 unter Aufteilung in zwei Teilarme 6g und nachfolgender Wiedervereinigung in Materialfliessrichtung fliessen.

Die erste Materialkomponente 7 bildet im Unterschied zu den sehr ähnlichen Ausführungsformen nach den Figuren 12 bis 14 und 19 sowohl im Griffteil 4g als auch in den Teilarmen 6g einen Mantelkörper aus, welcher einen Materialkern aus der zweiten Materialkomponente 8 umschliesst, der sich ausgehend vom Griffteil 4g in Richtung Kopfteil 2g ebenfalls in zwei Teilarme auftrennt, welche um die Durchgangsöffnung 11 geführt sind und sich dann nicht wiedervereinen. Die erste Materialkomponente 7 bildet bei dieser Ausgestaltung eine Schutzschicht um die zweite Materialkomponente 8, die es der zweiten Materialkomponente 8 nicht erlaubt sich nach der Durchgangsöffnung 11 wieder zu vereinigen. Dies bedeutet auch, dass die zweite Materialkomponente 8 die erste Materialkomponente nicht durchbricht.

Die zweite Materialkomponente 8 nimmt also auch hier den Platz der verdrängten Seele 7' im Griffteil 4g ein, wird dort jedoch noch von einem Mantelkörper aus der ersten Materialkomponente 7 umgeben. Wie erwähnt, kann durch einen dritten Spritzgiessschritt nochmals eine begrenzte Menge der ersten Materialkomponente 7 über den gemeinsamen Anspritzpunkt 10 eingespritzt werden, so dass die zweite Materialkomponente 8 auch im Bereich des Anspritzpunktes 10 von der ersten Materialkomponente 7 umgeben ist.

In der Ausführungsform nach Figur 20 vereinigen sich die beiden Teilastränge der zweiten Materialkomponente 8 im Anschluss an die Durchgangsöffnung 11 in Richtung Kopfteil 1g nicht wieder. Vielmehr laufen diese parallel mit einem Abstand nebeneinander her in den Halsteil 3g ein. Im Halsteil 3g laufen die beiden Teilstränge zungenförmig aus, ohne dass die zweite Materialkomponente 8 je aus der Ummantelung durch die erste Materialkomponente 7 ausbricht. Entsprechend ist der Kopfteil 2g vollständig aus der ersten Materialkomponente 7 gebildet. Diese Ausführungsform zeichnet sich durch die besondere ästhetische Wirkung der parallel laufenden Teilstränge aus. Die beiden Teilstränge haben einen Abstand von 0.3 mm bis 3 mm vorzugsweise von 0.5 mm bis 1.5 mm. Laufen sie asymmetrisch aus, das heisst sind sie nicht gleich lang, so haben ihre Enden eine Distanz in Längsachsenrichtung von maximal 10 mm vorzugsweise maximal 5 mm zueinander.

In den gezeigten Figuren ist die Durchgangsöffnung bezüglich der Materialfliessrichtung symmetrisch gestaltet. Es ist auch möglich, die Durchgangsöffnung asymmetrisch zu gestalten. Dies führt dazu, dass die Distanzen zwischen den Teilsträngen wie auch die Distanzen zwischen den Enden der Teilstränge beliebig variiert werden können. Selbstverständlich ist es auch möglich die zweite Materialkomponente 8 bis in das Kopfteil 1 g zu führen.

Die Figur 21 zeigt einen seitlichen Querschnitt durch den Griffkörper 1g nach Figur 20. Ebenfalls zu sehen ist die Formtrennlinie 7. Es ist zu erkennen, dass die zweite Materialkomponente 8 auf beiden Seiten der Formtrennlinie 12 angeordnet ist, also über diese hinweg verläuft.

Analog zur Ausführungsform gemäss Figur 13 und 14, kann der Bereich der Durchgangsöffnung 11, in den in Figur 19, 20 und 21 gezeigten Ausführungsarten, zwecks Ausbildung einer Daumenauflage 13 mit einer dritten Materialkomponente 9 umspritzt sein (nicht gezeigt). Die Umspritzung kann eine Überdeckung der Teilarme 6f, 6g zur Durchgangsöffnung 11 hin oder eine Überdeckung rund um den Griffkörper 11, 1 g im Bereich der Durchgangsöffnung sein.

Die beiden Materialkomponenten 7, 8 können gemäss dieser Ausführungsform aus einer Hartkomponente der oben beschriebenen Art sein. Es kann auch vorgesehen sein, dass die zweite Materialkomponente 8 aus einer Hartkomponente und die erste Materialkomponente 7 aus einem thermoplastischen Elastomer der oben beschriebenen Art ist oder umgekehrt. Um einen optischen Effekt zu erreichen, kann die erste Materialkomponente 7 transparent sein und die zweite Materialkomponente 8 farbig beziehungsweise opak oder umgekehrt. Damit wird ein interessanter optischer Effekt erreicht. Um eine weiche Oberfläche im Griffbereich zu erreichen, kann die erste Materialkomponente 7 eine Weichkomponente, beispielsweise ein TPE sein, und die zweite Materialkomponente 8 eine Hartkomponente. Dabei bildet die Hartkomponente ein Element, das dem Griff Stabilität gibt und schlussendlich auch mindestens teilweise das Halsteil 3b und das Kopfteil 2b bildet und dementsprechend die Funktionalität gewährleistet. In der Figur 20 und 21 ist die zweite Materialkomponente 8, welche innerhalb der ersten Materialkomponente 7 liegt, schraffiert dargestellt. Das Kopfteil 2g besteht ausschliesslich aus der ersten Materialkomponente 7. Das Halsteil 3g besteht mindestens teilweise aus der ersten Materialkomponente 7.

Die **Figur 22** zeigt einen Querschnitt durch den Halsteil 3g des Griffkörpers 1g gemäss der Figur 20 entlang der Linie E-E. Die Querschnittsansicht zeigt zwei Teilstränge der zweiten Materialkomponente 8, welche vollständig von der ersten Materialkomponente 7 ummantelt und ferner durch einen Steg aus der ersten Materialkomponente 7 voneinander beabstandet sind. Die unterschiedlichen Schraffuren deuten die verschiedenen Materialkomponenten an, die im Schnitt dargestellt sind.

Die **Figur 23** zeigt einen Querschnitt durch den Griffkörper 1 g gemäss Figur 19 oder 20 entlang der Linie F-F im Bereich der Daumenauflage 13. Die beiden Teilarme 6g weisen einen Kern aus der zweiten Materialkomponente 8 auf, welcher von der ersten Materialkomponente 7 vollständig ummantelt ist. Die Materialkomponenten der Teilarme, die im Schnitt dargestellt sind, sind schraffiert dargestellt. Die Durchgangsöffnung ist nicht gestrichelt dargestellt.

Die **Figur 24** zeigt einen Querschnitt durch den Griffteil 4g des Griffkörpers 1g gemäss Figur 20 entlang der Linie G-G. Der Griffteil 4g weist auf seiner Rückseite eine Einbuchtung aus. Die zweite Materialkomponente 8, welche von der ersten Materialkomponente 7 vollständig ummantelt ist, weist dabei zwei nierenförmige Teilkerne auf, welche über einen Verbindungssteg miteinander verbunden sind. Die Figur 24 zeigt, wie die Abkühlung der ersten Materialkomponente funktioniert. Der Körper kühlt sich von der Aussenoberfläche her gegen innen ab. Die Kühlung folgt der Aussengeometrie. Bei gleichmässiger Kühlung gibt es, wie dargestellt, rundum einen nicht mehr fliessfähigen Mantelkörper 7" beziehungsweise im Endprodukt einen Mantelkörper aus der ersten Materialkomponente 7 von regelmässiger Wandstärke. Die zweite Materialkomponente 8 ist entsprechend im Innern des Körpers angeordnet. Im vorliegenden Querschnitt ist es möglich, dass wenn die Kühlzeit der ersten Materialkomponente grösser gewählt wird, als sie für den gezeigten Griffkörper gewählt wurde, sich der nicht mehr fliessfähige Mantelkörper 7" im mittleren Bereich vereinigt. Damit würde erreicht, dass sich zwei Teilstränge bestehend aus der zweiten Materialkomponente 8 bilden würden, die durch einen nicht mehr fliessfähigen Mantelkörper 7" getrennt sind.

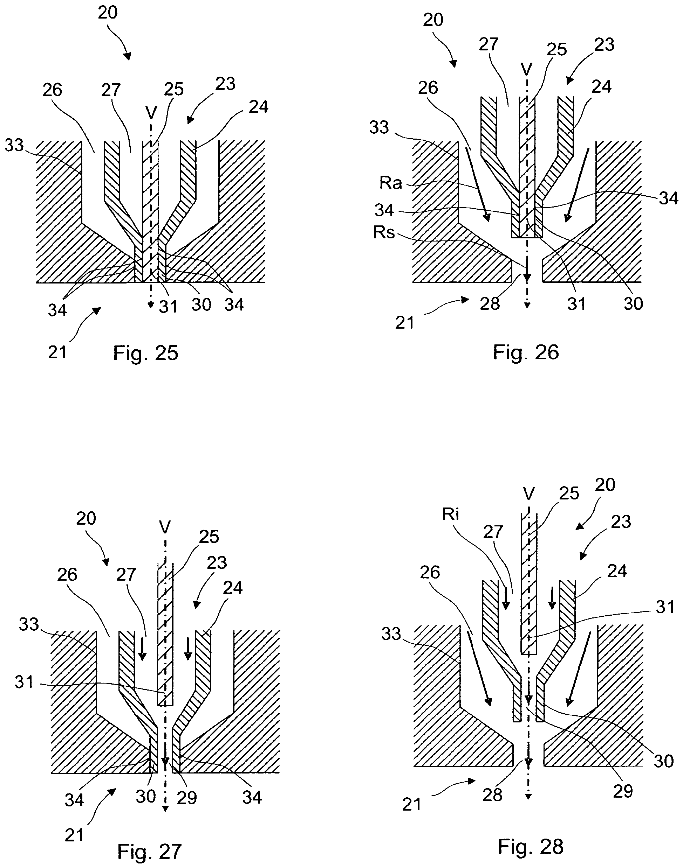

Die **Figuren 25 bis 28** zeigen Querschnittsansichten einer Heisskanaldüse 23 zur Herstellung eines Spritzgussteils mittels eines Co-Injection-Verfahrens, bei welchem mindestens zwei Materialkomponenten durch einen gemeinsamen Anspritzpunkt nacheinander in eine Werkzeugkavität 21 gespritzt werden. Die Heisskanaldüse 23 enthält einen Kanal mit einer Kanalwand 33, welcher in eine zylinderförmige Auslassöffnung 28 mündet. Die Auslassöffnung 28 mündet in die Werkzeugkavität 21 und weist bevorzugt einen kreisförmigen Querschnitt auf. Die Kanäle der Heisskanaldüse 23 werden, bevorzugt ausschliesslich, über die Kanalwand 33 von aussen beheizt.
Die Heisskanaldüse 23 ist gegenüber der Werkzeugkavität 21 vorzugsweise so positioniert, dass die Verschlussrichtung der Nadeln V in einem Winkel von 85° bis 90° zur Längsachse der Werkzeugkavität K liegt.
Die Verschlussnadeln und Materialzufuhrkanäle sind vorzugsweise rotationssymmetrisch ausgelegt (nicht die Spritzgiesswerkzeuge an sich). Im vorliegenden Fall heisst dies, dass in den Figuren 25 bis 28 die entsprechenden Teile oder Volumen aufgrund der Schnittdarstellung links und rechts der zweiten Verschlussnadel 25 erkennbar sind.

In den Kanal ist eine erste Verschlussnadel 24 axial eingeführt, welche zusammen mit der Kanalwand 33 einen äusseren, im Bereich der Verschlussnadel 24 ringförmigen, Materialzufuhrkanal 26 ausbildet. Die erste Verschlussnadel 24 ist als Hohlnadel ausgebildet und weist eine axiale Durchgangsöffnung 29 auf, welche einen inneren Materialzufuhrkanal 27 ausbildet. Die erste Verschlussnadel 24 weist einen zylinderförmigen Endabschnitt 30 auf. Dieser ist bevorzugt kreiszylinderförmig ausgebildet. Der Endabschnitt 30 bildet zusammen mit der Durchgangsöffnung 29 einen Hohlzylinderabschnitt aus, wobei die Durchgangsöffnung 29 im besagten Endabschnitt 30 ebenfalls bevorzugt einen kreisförmigen Querschnitt aufweist. Zum Verschliessen des äusseren Materialzufuhrkanals 26 greift der zylinderförmige Endabschnitt 30 der ersten Verschlussnadel 24 formschlüssig in die zylinderförmige Auslassöffnung 28 ein.

In die Durchgangsöffnung 29 greift eine zweite Verschlussnadel 25 ein, welche zylinderförmig ausgebildet ist. Der innere Materialzufuhrkanal 27 ist auf der Höhe der der zweiten Verschlussnadel 25 ebenfalls ringförmig ausgebildet. Die zweite Verschlussnadel 25 weist wenigstens einen zylinderförmigen, insbesondere kreiszylinderförmigen Endabschnitt 31 auf. Sie ist jedoch besonders bevorzugt vollständig zylinderförmig bzw. kreiszylinderförmig ausgebildet. Zum Verschliessen des inneren Materialzufuhrkanals 27 im Bereich der Durchgangsöffnung 29 greift die zweite Verschlussnadel 25 mit ihrem Endabschnitt 31 formschlüssig in den hohlzylinderförmigen Endabschnitt 30 der ersten Verschlussnadel 24 ein.

Die Figuren 25 bis 28 zeigen nun unterschiedliche Positionen der Verschlussnadeln 24, 25 wie sie während des Fertigungsprozesses anzutreffen sind.

Gemäss der Figur 25 greift die erste Verschlussnadel 24 in die zylinderförmige Auslassöffnung 28 ein und verschliesst so den äusseren Materialzufuhrkanal 26. Gleichzeitig greift die zweite Verschlussnadel 25 in den hohlzylinderförmigen Endabschnitt 30 der ersten Verschlussnadel 24 ein und verschliesst so den inneren Materialzufuhrkanal 27. Die Heisskanaldüse 23 ist somit komplett verschlossen, wobei die erste und zweite Verschlussnadel 24, 25 mit ihren Stirnseiten bündig zur Kavitätenwand im Bereich der Auslassöffnung liegen. Wann die Heisskanaldüse 23 in der in Figur 25 gezeigten Stellung ist, kann dem später aufgeführten Prozessablauf entnommen werden.

Gemäss der Figur 26 ist die erste Verschlussnadel 24 aus der zylinderförmigen Auslassöffnung 28 zurückgefahren und gibt den äusseren Materialzufuhrkanal 26 frei. Gleichzeitig greift die zweite Verschlussnadel 25 in den hohlzylinderförmigen Endabschnitt der ersten Verschlussnadel 24 ein und verschliesst so den inneren Materialzufuhrkanal 27. Die Heisskanaldüse 23 ist somit lediglich für die Materialzufuhr aus dem äusseren Materialzufuhrkanal 26 offen. Das zugeführte Material fliesst im ringförmigen Kanal in einer Fliessrichtung Ra entlang der ersten Verschlussnadel 24 zur Auslassöffnung 28 hin und wird über die Auslassöffnung 28 in Fliessrichtung Rs in die Werkzeugkavität 21 eingespritzt. Die Fliessrichtung Rs ist hier parallel zur Verschlussrichtung V der Verschlussnadeln 24, 25 und parallel zur Längsachse der Verschlussnadeln. Mit dieser Düseneinstellung kann beispielsweise zu Beginn des Spritzgiesszyklus die erste Materialkomponente in die Werkzeugkavität 21 eingespritzt werden. Wann die Heisskanaldüse 23 in der in Figur 26 gezeigten Stellung ist, kann dem später aufgeführten Prozessablauf entnommen werden.

Gemäss der Figur 27 greift die erste Verschlussnadel 24 in die zylinderförmige Auslassöffnung 28 ein und verschliesst so den äusseren Materialzufuhrkanal 26. Die zweite Verschlussnadel 25 ist jedoch aus dem hohlzylinderförmigen Endabschnitt 29der ersten Verschlussnadel 24 zurückgezogen und gibt so den inneren Materialzufuhrkanal 27 frei. Die Heisskanaldüse 23 ist somit lediglich für die Materialzufuhr aus dem inneren Materialzufuhrkanal 27 offen. Das zugeführte Material fliesst im inneren Kanal in einer Fliessrichtung Ri entlang der zweiten Verschlussnadel 25 zur Auslassöffnung 28 hin und wird über die Auslassöffnung 28 in Fliessrichtung Rs in die Werkzeugkavität 21 eingespritzt. Mit dieser Düseneinstellung kann beispielsweise in einem nachfolgenden Schritt des Spritzgiesszyklus die zweite Materialkomponente in die Werkzeugkavität 21 eingespritzt werden. Wann die Heisskanaldüse 23 in der in Figur 27 gezeigten Stellung ist, kann dem später aufgeführten Prozessablauf entnommen werden.

Bevorzugt wird die Materialkomponente mit dem höheren Schmelzpunkt über die äusseren Materialzufuhrkanal 26 zugeführt, weil dieser über die Kanalwand 33 direkt beheizbar ist. Die Materialkomponente mit dem tieferen Schmelzpunkt wird bevorzugt über den inneren Materialzufuhrkanal 27 zugeführt, da die Heizung indirekt und auch mit gewissen Verlusten verbunden ist. Wird im Griffkörper beispielsweise als erste Materialkomponente 7 ein PCT-A und als zweite Materialkomponente 8 ein PP eingesetzt, so ist es optimal, wenn das PCT-A mit dem höheren Schmelzpunkt über den äusseren Materialzufuhrkanal 26 und das PP mit dem tieferen Schmelzpunkt über den inneren Materialzufuhrkanal 27 zugeführt wird.

Die Einstellungen der Temperaturen ist wichtig. Es kann sein, dass nicht jede beliebige Materialkombination verarbeitbar ist. Da nur von aussen geheizt wird, muss die Temperatur im inneren Materialzufuhrkanal 27 ebenfalls von aussen geregelt werden. Können die Temperaturvorgaben jedoch nicht eingehalten werden, so kann sich Kunststoffmaterial zersetzen.

Falls die Temperaturverhältnisse entsprechend eingestellt werden können und die entsprechenden Materialkomponenten es zulassen, ist es auch möglich das Material mit dem höheren Schmelzpunkt im inneren Materialzufuhrkanal 27 zu verarbeiten. Vorzugsweise weist die erste Materialkomponente, welche der zuerst eingespritzten Materialkomponente entspricht, einen höheren Schmelzpunkt auf als die zweite Materialkomponente. Sie wird beispielsweise die volle Fliessfähigkeit der zweiten Materialkomponente gewährleistet, auch wenn die erste Materialkomponente in der Werkzeugkavität 21 bereits etwas abgekühlt und als Mantelkörper verfestigt ist.

Der Prozessablauf in Bezug auf die in den Figuren 25 bis 27 gezeigten Positionen der Heisskanaldüse 23 bei geschlossener Werkzeugkavität gestaltet sich wie folgt:
1. Heisskanaldüse 23 ist komplett geschlossen (siehe Figur 25)
2. Äusserer Materialzufuhrkanal 26 wird geöffnet (siehe Figur 26)
3. Heisskanaldüse 23 ist komplett geschlossen (siehe Figur 25)
4. Innerer Materialzufuhrkanal 27 wird geöffnet (siehe Figur 27)
5. Heisskanaldüse 23 ist komplett geschlossen (siehe Figur 25)

Dabei ist es je nach Konfiguration des Produkts in Bezug auf die Materialkomponenten auch möglich, dass zuerst der innere Materialzufuhrkanal 27 geöffnet wird und dieses Material zugeführt wird und erst anschliessend das Material des äusseren Materialzufuhrkanals 26 zugeführt wird. Das heisst, dass die Schritte 2 und 4 vertauscht würden.

Beim Spritzgiessen der ersten Materialkomponente 7 wird der Materialzufuhrkanal geöffnet, die erste Materialkomponente 7 in die Kavität eingespritzt, und der Materialzufuhrkanal anschliessend wieder geschlossen. Es wird kein Nachdruck benötigt, da mit der ersten Materialkomponente 7 die Werkzeugkavität 21 nicht komplett gefüllt wird. Beim Spritzgiessen der zweiten Materialkomponente 8, die die Werkzeugkavität 21 komplett füllt, wird ein Nachdruck angelegt. Für die Heisskanaldüse 23 heisst dies, dass sie geöffnet bleibt, damit der Nachdruck, welcher vom Spritzaggregat auf die Materialkomponente aufgebaut wird, auf die Materialkomponente in der Werkzeugkavität 21 wirkt. Die Heisskanaldüse 23 wird wieder geschlossen, wenn der Nachdruck aufgrund des Prozessablaufes nicht mehr benötigt wird.

Der Schritt 3 entspricht der Kühlzeit, die die erste Materialkomponente 7 benötigt, damit sich ein nicht mehr fliessfähiger Mantelkörper 7" bilden kann. Weiter entspricht auch der Schritt 5 der Kühlzeit, dann jedoch so, dass der Körper am Ende der Kühlzeit genug Stabilität aufweist, damit dieser aus der Werkzeugkavität herausgenommen werden kann.

Ein wichtiger Faktor ist der jeweilige Einspritzdruck der Materialkomponenten. Der Einspritzdruck für die erste Materialkomponente 7 ist gleich wie bei der Herstellung eines herkömmlichen Griffkörpers, insbesondere für eine Zahnbürste. Wie beschrieben, wird nach der Materialzufuhr kein Nachdruck aufgebaut. Das Einspritzen der zweiten Materialkomponente 8 ist druckmässig gleich ausgelegt, wie die Standard-Spritzgiess-Prozesse von Griffkörpern, insbesondere Zahnbürsten. Bei der zweiten Materialkomponente 8 wird dann der Nachdruck eingesetzt.

Die Grösse des Einspritzdrucks kann nicht generell definiert werden, da er von verschiedenen Faktoren abhängt. Diese Faktoren sind beispielsweise: Materialeigenschaften, Düsengeometrie oder die Grösse des Einlassquerschnitts (Auslassöffnung der Heisskanaldüse, Durchgangsöffnung der Heisskanaldüse). Wird beispielsweise der Einlassquerschnitt kleiner, so erhöht sich der Einspritzdruck.

Gemäss der Figur 28 ist die erste Verschlussnadel 24 aus der zylinderförmigen Auslassöffnung 28 zurückgefahren und gibt den äusseren Materialzufuhrkanal 26 frei. Die zweite Verschlussnadel 25 ist ebenfalls aus dem hohlzylinderförmigen Endabschnitt 30 der ersten Verschlussnadel 24 zurückgezogen und gibt den inneren Materialzufuhrkanal 27 frei. Die Heisskanaldüse 23 ist somit sowohl für die Materialzufuhr aus dem inneren als auch aus dem äusseren Materialzufuhrkanal 26, 27 offen. Mit dieser Düseneinstellung kann eine erste und zweite Materialkomponente gleichzeitig in die Werkzeugkavität eingespritzt werden. Die Figur 28 stellt lediglich eine technische Möglichkeit einer Düseneinstellung dar. Bezüglich der vorliegenden Erfindung hat diese Düseneinstellung jedoch eine untergeordnete Bedeutung, da die erste und zweite Materialkomponente bevorzugt strikt sequentiell und nicht gleichzeitig oder überlappend eingespritzt werden.

Die zylinderförmigen Dichtflächen 34 für die erste Verschlussnadel 24 und die zweite Verschlussnadel 25 liegen parallel zur Verschlussrichtung V. Da nun die Verschlussrichtung V parallel zur Längsachse der Verschlussnadeln 24, 25 liegt, hat die Wärmeausdehnung der Verschlussnadeln 24, 25 praktisch keinen Einfluss auf die Güte der Abdichtung des Verschlusses. Die Verschlussnadeln 24, 25 können beispielsweise eine Länge von rund 100 mm aufweisen, während deren Durchmesser z. B. maximal 2.5 mm betragen. Soll nun das Spritzgiesswerkzeug je nach eingesetztem Kunststoff bei unterschiedlichen Temperaturen betrieben werden, so darf die Längenausdehnung der Verschlussnadel, welche in einem solchen Falle signifikant sein kann, keinen Einfluss auf die Dichtigkeit haben. Dies ist mit vorliegender Heisskanaldüse 23 gewährleistet, da die Längenausdehnung der Verschlussnadeln 24, 25 keinen Einfluss auf die Ausbildung der Dichtflächen 34 hat. Die Wärmeausdehnung der Verschlussnadeln 24, 25 quer zur Längsachse ist hingegen aufgrund des relativ kleinen Durchmessers der Verschlussnadeln 24, 25 vernachlässigbar beziehungsweise innerhalb einer handhabbaren Toleranz. Diese übt keinen spürbaren Effekt auf die Güte der Dichtung des Verschlusses aus.

Die Öffnungsdistanzen der Nadeln, das heisst wie weit sich die Nadel von der Werkzeugkavität in Bezug auf die Schliessposition der Verschlussnadel verschiebt, um die Materialkomponente einfliessen zu lassen, hängt von verschiedenen Faktoren ab. Diese Faktoren können beispielsweise die Materialeigenschaften der Materialkomponente im entsprechenden Materialzufuhrkanal oder die Geometrie der Düse sein. Der Hub kann daher nicht generell festgelegt werden.

Die Verschlussnadeln 24 und 25 sind vorzugsweise aus einem vergüteten Stahl hergestellt.

Ein wichtiger Vorteil der Erfindung ist, dass deren Umsetzung lediglich Modifikationen an der Werkzeugplatte eines bestehenden Spritzgiesswerkzeugs erfordert, nämlich auf der Düsenseite der Werkzeugplatte. So könnten, falls die Geometrien und das Erscheinungsbild des Griffkörpers stimmen, bestehende Spritzgiesswerkzeuge durch ein Umrüsten der Werkzeugplatte auf der Düsenseite auf die erfindungsgemässe Technologie umgebaut werden. Auf diese Weise lassen sich beispielsweise neue Produktdesigns mit dem halben Aufwand realisieren.

Selbstverständlich sind die in dieser Schrift gezeigten Ausgestaltungsvarianten beispielhaft. Im Rahmen der Erfindung können die einzelnen Ausprägungen und Elemente dieser Ausgestaltungsvarianten mit anderen Ausgestaltungsvarianten kombiniert werden ohne den Rahmen dieser Erfindung zu verlassen. Die Merkmale aus den Figurenbeschreibungen lassen sich über die einzelnen gezeigten Ausführungsformen hinweg miteinander kombinieren, insbesondere wenn die Ausführungsformen eine gleiche oder ähnliche Ausprägung zeigen.

### BEZUGSZEICHENLISTE

- 1a..g: Griffkörper einer Zahnbürste
- 2a..g: Kopfteil
- 3a..g: Halsteil
- 4a..g: Griffteil
- 5a..g: Borstenaufnahmelöcher
- 6c..g: Teilarme
- 7: erste Materialkomponente
- 7': fliessfähige Seele der ersten Materialkomponente, entspricht dem Kernkörper
- 7": nicht mehr fliessfähige Mantelkörper der ersten Materialkomponente, entspricht dem Mantelkörper
- 8: zweite Materialkomponente
- 9: dritte Materialkomponente
- 10: Anspritzpunkt
- 11: Durchgangsöffnung
- 12: Formtrennlinie
- 13: Daumengriff
- 20: Spritzgiesswerkzeug
- 21: Werkzeugkavität
- 22: Kavitätenwand
- 23: Heisskanaldüse
- 24: erste Verschlussnadel
- 25: zweite Verschlussnadel
- 26: äusserer Materialzufuhrkanal
- 27: innerer Materialzufuhrkanal
- 28: zylinderförmige Auslassöffnung
- 29: Durchgangsöffnung der ersten Verschlussnadel
- 30: Endabschnitt der ersten Verschlussnadel
- 31: Endabschnitt der zweiten Verschlussnadel
- 33: Kanalwand
- 34: Dichtfläche
- V: Verschlussrichtung der Nadeln
- K: Längsachse der Werkzeugkavität
- M: Materialfliessrichtung
- Ra: Fliessrichtung
- Ri: Fliessrichtung
- Rs: Fliessrichtung

## Patentansprüche

1. Griffkörper (1 a..1 g), insbesondere eines Körperpflegeartikels, wie Zahnbürste, umfassend einen Griffteil (4a..4g), einen Halsteil (3a..3g) und einen Kopfteil (2a..2g), wobei der Griffkörper (1a..1g) eine erste und zweite Materialkomponente (7, 8) aus thermoplastischem Kunststoff enthält, wobei die erste und zweite Materialkomponente (7, 8) einen gemeinsamen Anspritzpunkt (10) aufweisen und der Griffteil (4a..4g) einen Mantelkörper aus der ersten Materialkomponente (7) und einen, vom Mantelkörper wenigstens teilweise umhüllten Kernkörper aus der zweiten Materialkomponente (8) enthält, wobei der Mantelkörper wenigstens teilweise die Oberfläche des Griffteils (4a..4g) ausbildet, **dadurch gekennzeichnet, dass** der Anspritzpunkt außerhalb einer durch die Formtrennung ausgebildeten Formtrennlinie (12) angeordnet ist und dass der Griffkörper durch Spritzgiessen in einem Spritzgiesswerkzeug (20) mittels eines Heisskanalverfahrens hergestellt wird.

2. Griffkörper gemäss Anspruch 1, **dadurch gekennzeichnet, dass** der Griffkörper (1d, 1e) eine dritte Materialkomponente (9) enthält, welche vorzugsweise weichelastisch ist, und beispielsweise aus einem thermoplastischen Elastomer besteht.

3. Griffkörper gemäss Anspruch 1, **dadurch gekennzeichnet, dass** die zweite Materialkomponente (8), vorzugsweise zum Kopfteil (2b..2f) hin, aus dem umhüllenden Mantelkörper der ersten Materialkomponente (7) ausbricht und an die Oberfläche tritt, und vorzugsweise der Kopfteil (2b..2f) vollständig aus der zweiten Materialkomponente (8) besteht.

4. Griffkörper gemäss Anspruch 1, **dadurch gekennzeichnet, dass** der Griffkörper (1a, 1g), vorzugsweise mit Ausnahme des Anspritzpunktes (10), einen vollständig vom Mantelkörper aus der ersten Materialkomponente (7) umgebenen Kernkörper aus der zweiten Materialkomponente (8) enthält.

5. Griffkörper gemäss einem der Ansprüche 1 bis 4, **dadurch gekennzeichnet, dass** der gemeinsame Anspritzpunkt (10) der ersten und zweiten Materialkomponente (7, 8) auf der Vorder- oder Rückseite des Griffkörpers (1a..1g), vorzugsweise im Griffteil (4a..4g) und vorzugsweise auf der Rückseite angeordnet ist.

6. Griffkörper gemäss einem der Ansprüche 1 bis 5, **dadurch gekennzeichnet, dass** der Griffkörper (1c..1g) im Griff- (4c..4d) und/oder Halsteil (3c..3g) eine Durchgangsöffnung (11) aufweist, durch welche der Griffkörper (1c..1g) in zwei Teilarme (6c..6g) aufgeteilt wird, und jeder Teilarm (6c..6g) einen Mantelkörper aus der ersten Materialkomponente (7) und einen, vom Mantelkörper umhüllten Kernkörper aus der zweiten Materialkomponente (8) enthält, wobei sich die beiden strangförmigen Kernkörper beim Zusammenschluss der Teilarme (6c..6g) zum Kopfteil (2c..2g) hin:
a. wiedervereinen, und als gemeinsamer, strangförmiger und vom Mantelkörper umhüllten Kernkörper zum Kopfteil (2c..2g) hin weiter verlaufen, oder
b. als getrennte, vom Mantelkörper umhüllte Teilstränge parallel zueinander zum Kopfteil (2c..2g) hin weiter verlaufen,
und der oder die strangförmigen Kernkörper vorzugsweise im Halsteil (3a..3g) oder Kopfteil (2a..2g) zungenförmig auslaufen.

7. Griffkörper gemäss einem der Ansprüche 1 bis 6, **dadurch gekennzeichnet, dass** die erste und/oder zweite Materialkomponente (7, 8) eine Hartkomponente, vorzugsweise aus einem Polypropylen (PP), Polycyclohexylenedimethyleneterephthalate (PCT-A), Polyethylen (PE) oder einem Styrolpolymerisat, wie Styrolacrylnitril (SAN) ist.

8. Griffkörper gemäss einem der Ansprüche 1 bis 7, **dadurch gekennzeichnet, dass** die erste und/oder zweite Materialkomponente (7, 8) eine Weichkomponente, vorzugsweise aus einem Thermoplastischen Elastomer ist.

9. Verfahren zur Herstellung eines länglichen Griffkörpers (1a..1g), insbesondere eines Körperpflegeartikels, wie Zahnbürste, aus mindestens zwei Materialkomponenten (7, 8) aus thermoplastischem Kunststoff, umfassend das Spritzgiessen der Materialkomponenten (7, 8) in einem Spritzgiesswerkzeug (20) mittels eines Heisskanalverfahrens, wobei mittels folgenden Schritten mindestens zwei Kunststoffkomponenten (7, 8) über einen gemeinsamen Anspritzpunkt, welcher ausserhalb einer durch die Formtrennung ausgebildeten Formtrennlinie (12) angeordnet ist, in eine gemeinsame Werkzeugkavität (21) des Spritzgiesswerkzeuges (20) gespritzt werden:
- Spritzgiessen einer ersten Materialkomponente (7) in die Werkzeugkavität (21) und partielles Befüllen der Werkzeugkavität (21) mit der ersten Materialkomponente (7) durch eine Heisskanaldüse;
- Abkühlen der eingespritzten ersten Materialkomponente (7) in der Werkzeugkavität (21), wobei wenigstens eine fliessfähige Seele in der ersten Materialkomponente (7) erhalten bleibt;
- Spritzgiessen einer zweiten Materialkomponente (8) in die Werkzeugkavität (21) des Spritzgiesswerkzeuges (20) durch dieselbe Heisskanaldüse (23) und weiteres, vorzugsweise komplettes, Befüllen der Werkzeugkavität (21) mit der zweiten Materialkomponente (8),
wobei während des Spritzgiessens der zweiten Materialkomponente (8) die fliessfähige Seele der zuvor in die Werkzeugkavität (21) gespritzte ersten Materialkomponenten (7) in Materialfliessrichtung (M) verdrängt wird, und die, vorzugsweise an die Kavitätenwand (33) anliegende, zumindest teilweise verfestigte erste Materialkomponente (7) die einfliessende zweite Materialkomponente (8) wenigstens teilweise umgibt.

10. Verfahren gemäss Anspruch 9, **dadurch gekennzeichnet, dass** die Werkzeugkavität (21) als Längshohlraum mit einer Längsachse (K) ausgebildet ist, und der Anspritzpunkt (10) vorzugsweise so angelegt ist, dass die erste und zweite Materialkomponenten quer zur Längsachse (K) der Werkzeugkavität (21), vorzugsweise unter einem Winkel zwischen 85° und 90° zwischen der Längsachse (K) und der Verschlussrichtung der Nadeln (V), in die Werkzeugkavität (21) gespritzt werden.

11. Verfahren gemäss Anspruch 9 oder 10, **dadurch gekennzeichnet, dass** das Verhältnis des eingespritzten Volumens der ersten Materialkomponente (7) zum Gesamtvolumen der Werkzeugkavität (21) und das Verhältnis der fliessfähigen Seele (7') der ersten Materialkomponente (7) zum unbefüllten Volumen der Werkzeugkavität (21) so gewählt wird, dass die nachfolgend eingespritzte zweite Materialkomponenten (8) in Materialfliessrichtung (M) aus der diese umgebenden ersten Materialkomponente (7) ausbricht, und auf diese Weise ein in Materialfliessrichtung (M) vorderer Endabschnitt der Werkzeugkavität (21) vollständig und ausschliesslich mit der zweiten Materialkomponenten (8) befüllt wird.

12. Verfahren gemäss Anspruch 90 oder 10, **dadurch gekennzeichnet, dass** das Verhältnis des eingespritzten Volumens der ersten Materialkomponente (7) zum Gesamtvolumen der Werkzeugkavität (21) und das Verhältnis der fliessfähigen Seele (7') der ersten Materialkomponente (7) zum unbefüllten Volumen der Werkzeugkavität (21) so gewählt wird, dass die zweite Materialkomponenten (8) die fliessfähige Seele (7') der ersten Materialkomponente (7) in Materialfliessrichtung (M) verdrängt, wobei die verdränge Seele (7') in Materialfliessrichtung (M) einen vorderen Endabschnitt der Werkzeugkavität (21) befüllt, so dass die zweite Materialkomponente (8), vorzugsweise ausser am Anspritzpunkt (10), vollständig von der ersten Materialkomponente (7) umgeben ist.

13. Verfahren gemäss einem der Ansprüche 9 bis 12, **dadurch gekennzeichnet, dass**
a. das Gesamtvolumen der Werkzeugkavität (21) abzüglich des Gesamtvolumens der eingespritzten ersten Materialkomponente (7) kleiner ist als die durch die zweite Materialkomponente (8) verdrängte, fliessfähige Seele (7'); oder
b. das Gesamtvolumen der Werkzeugkavität (21) abzüglich des Gesamtvolumens der eingespritzten ersten Materialkomponente (7) grösser oder gleich ist als die durch die zweite Materialkomponente (8) verdrängte, fliessfähige Seele (7').

14. Verfahren gemäss einem der Ansprüche 9 bis 13, **dadurch gekennzeichnet, dass** sich die Werkzeugkavität (21) in Materialfliessrichtung (M) vorübergehend in wenigstens zwei Teilkanäle (6f, 6g) aufteilt, welche sich wieder vereinen, und beim Einspritzen der zweiten Materialkomponente (8) die fliessfähige Seele (7') der ersten Materialkomponente (7) in Materialfliessrichtung (M) in einen vorderen Endabschnitt der Werkzeugkavität (21) verdrängt wird und die zweite Materialkomponente (8) unter Ausbildung zweier Teilstränge der verdrängten Seele (7') durch die Teilkanäle (6f, 6g) nachfolgt, wobei
a. sich die beiden Teilstränge im Anschluss an die Vereinigung der beiden Teilkanäle (6f, 6gg) wiedervereinen, und als gemeinsamer, strangförmiger und vom Mantelkörper umhüllter Kernkörper zum Kopfteil (2c..2g) hin weiter verlaufen, oder
b. die beiden Teilstränge im Anschluss an die Vereinigung der beiden Teilkanäle (6f, 6g) unter Ausbildung von zwei zungenförmig auslaufenden Endabschnitten getrennt und parallel zueinander verlaufen.

15. Verfahren gemäss einem der Ansprüche 9 bis 16, **dadurch gekennzeichnet, dass** im Anschluss an das Spritzen der zweiten Materialkomponente (8) wieder die erste Materialkomponente (7) gespritzt wird, so dass die Oberfläche am Anspritzpunkt (10) aus der ersten Materialkomponente (7) geformt wird.

16. Verfahren gemäss einem der Ansprüche 9 bis 15, **dadurch gekennzeichnet, dass** das Spritzgiesswerkzeug (20) ein Heisskanalwerkzeug ist, welches eine in eine Werkzeugkavität (21) mündende Heisskanaldüse (23) enthält, welche als Nadelverschlussdüse ausgebildet ist, wobei die Heisskanaldüse (23) eine erste als Hohlnadel (24) ausgebildete Verschlussnadel, sowie eine, in die Hohlnadel (24) einfahrbare zweite Verschlussnadel (25) enthält, und die erste Verschlussnadel (24) in der Heisskanaldüse (23) mit einer aussen liegenden Kanalwand (33) einen äusseren Materialzufuhrkanal (26) und mit ihrer axialen Durchgangsöffnung (29) einen inneren Materialzufuhrkanal (27) ausbildet.

17. Verfahren gemäss Anspruch 16, **dadurch gekennzeichnet, dass** die Heisskanaldüse (23) eine zylinderförmige Auslassöffnung (28) aufweist, und die erste Verschlussnadel (24) einen zylinderförmigen Endabschnitt (30) aufweist, welcher so ausgestaltet ist, dass dieser formschlüssig in die zylinderförmigen Auslassöffnung (28) einfahrbar ist, um so unter Ausbildung einer parallel zur Verschlussrichtung (V) verlaufenden zylindrischen Dichtfläche den äusseren Materialzufuhrkanal (26) zur Werkzeugkavität (21) hin abzudichten.

18. Verfahren gemäss Anspruch 17, **dadurch gekennzeichnet, dass** die zweite Verschlussnadel (25) einen zylinderförmigen Endabschnitt (31) aufweist und die Durchgangsöffnung (29) der ersten Verschlussnadel (24) in ihrem Endabschnitt (30) zylinderförmig ist, so dass die zweite Verschlussnadel (25) formschlüssig in die Durchgangsöffnung (29) am zylinderförmigen Endabschnitt (30) der ersten Verschlussnadel (24) einfahrbar ist, um so unter Ausbildung einer parallel zur Verschlussrichtung (V) verlaufenden zylindrischen Dichtfläche den inneren Materialzufuhrkanal (27) zu einer Werkzeugkavität (21) hin abzudichten.

## Claims

1. A grip body (1a..1g), in particular of a body care article, such as toothbrush, comprising a grip part (4a..4g), a neck part (3a..3g) and a head part (2a..2g), wherein the grip body (1a..1g) comprises a first and a second material component (7, 8) of a thermoplastic plastic, wherein the first and the second material component (7, 8) have a common injection point (10), and the grip part (4a..4g) comprises a jacket body of the first material component (7) and a core body of the second material component (8) which is at least partly enveloped by the jacket body, wherein the jacket body at least partly forms the surface of the grip part (4a..4g),
**characterised in that**
the injection point (10) is arranged outside a mould partition line (12) formed by the mould partition, and the grip body (1a..1g) is produced by means of inject moulding in an injection moulding tool (20) by way of a hot-runner method.

2. A grip body according to claim 1, **characterised in that** the grip body (1d, 1e) comprises a third material component (9) which is preferably soft-elastic, and for example consists of a thermoplastic elastomer.

3. A grip body according to claim 1, **characterised in that** the second material component (8) preferably towards the head part (2b..2f) breaks out of the enveloping jacket body of first material component (7) and comes to the surface, and preferably the head part (2b..2f) consists completely of the second material component (8).

4. A grip body according to claim 1, **characterised in that** the grip body (1a, 1g), preferably with the exception of the injection point (10), comprises a core body of the second material component (8) which is completely surrounded by the jacket body of the first material component (7).

5. A grip body according to one of the claims 1 to 4, **characterised in that** the common injection point (10) of the first and second material component (7, 8) is arranged on the front side or rear side of the grip body (1a,..1g), preferably in the grip part (4a..4g) and preferably on the rear side.

6. A grip body according to one of the claims 1 to 5, **characterised in that** the grip body (1c..1g) in the grip part (4c..4d) and/or neck part (3c..3g) comprises a through-opening (11), by way of which the grip body (1c..1g) is divided into two part-arms (6c..6g), and each part-arm (6c..6g) comprises a jacket body of the first material component (7) and a core body of the second material component (8) which is enveloped by the jacket body, wherein the two line-like core bodies, at the coming-together of the part-arms (6c..6g) towards the head part (2c..2g):
a. reunify, and run further towards the head part (2c..2g) as a common, line-like core body which is enveloped by the jacket body, or
b. run further in a manner parallel to one another towards the head part (2c..2g) as separate part-lines which are enveloped by the jacket body,
and the line-like core body or bodies preferably run out in the neck part (3a..3g) or head part (2a..2g) in a tongue-like manner.

7. A grip body according to one of the claims 1 to 6, **characterised in that** the first and/or the second material component (7, 8) is a hard component, preferably of a polypropylene (PP) polycyclohexylene dimethylene terephthalate (PCT-A), polyethylene (PE) or a styrene polymerisate, such as styrene acrylonitrile (SAN).

8. A grip body according to one of the claims 1 to 7, **characterised in that** the first and/or second material component (7, 8) is a soft component, preferably of a thermoplastic elastomer.

9. A method for manufacturing an elongate grip body (1a..1g), in particular of a body care article, such as toothbrush, of at least two material components (7, 8) of a thermoplastic plastic, comprising the injection moulding of the material components (7, 8) in an injection moulding tool (20) by way of a hot-runner method,
wherein
at least two plastic components (7, 8) are injected via a common injection point into a common tool cavity (21) of the injection moulding tool (20) by way of the following steps:
- injection moulding a first material component (7) into the tool cavity (21) and a partial filling of the tool cavity (21) with the first material component (7) through a hot-runner nozzle;
- cooling the injected first material component (7) in the tool cavity (21), wherein at least one flowable soul is retained in the first material component (7);
- injection moulding a second material component (8) into the tool cavity (21) of the injection moulding tool (20) through the same hot-runner nozzle (23) and further, preferably complete filling of the tool cavity (21) with the second material component (8);
wherein the flowable soul of the first material component (7) previously injected into the tool cavity (21) is displaced in the material flow direction (M) during the injection moulding of the second material component (8), and the first material component (7) which preferably bears on the cavity wall (33) and is at least partly solidified at least partly surrounds the flowing-in second material component (8).

10. A method according to claim 9, **characterised in that** the tool cavity (21) is designed as a longitudinal cavity with a longitudinal axis (K), and the injection point (10) is preferably designed such that the first and the second material components are injected transversely to the longitudinal axis (K) of the tool cavity (21), preferably at an angle of between 85° and 90° between the longitudinal axis (K) and the closure direction of the needles (V), into the tool cavity (21).

11. A method according to claim 9 or 10, **characterised in that** the ratio of the injected volume of the first material component (7) to the total volume of the tool cavity (21) and the ratio of the flowable soul (7') of the first material component (7) to the unfilled volume of the tool cavity (21) is selected such that the subsequently injected second material component (8) breaks out of the first material component (7) surrounding this, in the material flow direction (M), and in this manner an end section of the tool cavity (21) which is at the front in the material flow direction (M) is completely and exclusively filled with the second material component (8).

12. A method according to claim 9 or 10, **characterised in that** the ratio of the injected volume of the first material component (7) to the total volume of the tool cavity (21) and the ratio of the flowable soul (7') of the first material component (7) to the unfilled volume of the tool cavity (21) is selected such that the second material component (8) displaces the flowable soul (7') of the first material component (7) in the material flow direction (M), wherein the displaced soul (7') in the material flow direction (M) fills a front end section of the tool cavity (21), so that the second material component (8) is completely surrounded by the first material component (7), preferably except for at the injection point (10).

13. A method according to one of the claims 9 to 12, **characterised in that**
a. the total volume of the tool cavity (21) minus the total volume of the injected first material component (7) is smaller than the flowable soul (7') displaced by the second material component (8) or
b. the total volume of the tool cavity (21) minus the total volume of the injected first material component (7) is larger than or equal to the flowable soul (7') displaced by the second material component (8).

14. A method according to one of the claims 9 to 13, **characterised in that** the tool cavity (21) in the material flow direction (M) is temporarily divided into at least two part-channels (6f, 6g) which reunify again, and on injecting the second material component (8), the flowable soul (7') of the first material component (7) is displaced in the material flow direction (M) into a front end section of the tool cavity (21) and the second material component (8) amid the formation of two part-lines follows the displaced soul (7') through the part-channels (6f, 6g), wherein
a. the two part-lines subsequently to the unification of the two part-channels (6f, 6g) reunify, and run further as a common, line-like core body enveloped by the jacket body, towards the head part (2c..2g), or
b. the two part-lines subsequently to the unification of the two part-channels (6f, 6g) run separately and parallel to one another amid the formation of two end-sections running out in a tongue-like manner.

15. A method according to one of the claims 9 to 14, **characterised in that** the first material component (7) is injected again subsequently to the injection of the second material component (8), so that the surface at the injection point (10) is formed from the first material component (7).

16. A method according to one of the claims 9 to 15, wherein the injection moulding tool (20) is a hot-runner tool which comprises a hot-runner nozzle (23) which runs out into a tool cavity (21) and which is designed as a needle closure nozzle, wherein the hot-runner nozzle (23) comprises a first closure needle designed as a hollow needle (24) as well as a second closure needle (25) which can be inserted into the hollow needle (24), and the first closure needle (24) in the hot-runner nozzle (23) with an outwardly lying channel wall (33) forms an outer material feed channel (26) and with its axial through-opening (29) forms an inner material feed channel (27).

17. A method according to claim 16, **characterised in that** the hot-runner nozzle (23) comprises a cylinder-shaped outlet opening (28), and the first closure needle (24) comprises a cylinder-shaped end section (30) which is designed such that this can be introduced into the cylinder-shaped outlet opening (28) with a positive fit, in order thus, amid the formation of a cylindrical sealing surface running parallel to the closure direction (V), to seal the outer material feed channel (26) to the tool cavity (21).

18. A method according to claim 17, **characterised in that** the second closure needle (25) comprises a cylinder-shaped end section (31), and the through-opening (29) of the first closure needle (24) in its end section (30) is cylinder-shaped, so that the second closure needle (25) can be inserted into the through-opening (29) at the cylinder-shaped end section (30) of the first closure needle (24) with a positive fit, in order thus, amid the formation of a cylindrical sealing surface running parallel to the closure direction (V), to seal the inner material feed channel (27) to a tool cavity (21).

## Revendications

1. Corps de manche (1a...1g), en particulier pour article de soins corporels, par exemple pour brosse à dents, comprenant une partie de manche (4a...4g), une partie de col (3a...3g) et une partie de tête (2a...2g), le corps de manche (1a...1g) contenant un premier et un deuxième composant matériel (7, 8) en matière synthétique thermoplastique,
le premier et le deuxième composant matériel (7, 8) présentant un point d'injection (10) commun,
la partie de manche (4a...4g) contenant un corps d'enveloppe en le premier composant matériel (7) et un corps d'âme en le deuxième composant matériel (8) englobé au moins en partie dans le corps d'enveloppe,
le corps d'enveloppe formant au moins en partie la surface de la partie de manche (4a...4g),
**caractérisé en ce que**
le point d'injection est disposé à l'extérieur d'une ligne (12) de démoulage formée lors du démoulage et
**en ce que** le corps de manche est réalisé par moulage par injection dans un outil (20) de moulage par injection, au moyen d'un procédé à canal chauffé.

2. Corps de manche selon la revendication 1, **caractérisé en ce que** le corps de manche (1d, 1e) contient un troisième composant matériel (9) qui est de préférence élastiquement déformable et est constitué par exemple d'un élastomère thermoplastique.

3. Corps de manche selon la revendication 1, **caractérisé en ce que** le deuxième composant matériel (8), sort du corps d'enveloppe du premier composant matériel (7) qui l'englobe, de préférence en direction de la partie de tête (2b...2f), et aboutit à la surface, la pièce de tête (2b...2f) étant de préférence entièrement constituée du deuxième composant matériel (8).

4. Corps de manche selon la revendication 1, **caractérisé en ce que** de préférence à l'exception du point d'injection (10), le corps de manche (1a, 1g) contient un corps d'âme en le deuxième composant matériel (8) entouré complètement par le corps d'enveloppe en le premier composant matériel (7).

5. Corps de manche selon l'une des revendications 1 à 4, **caractérisé en ce que** le point d'injection (10) commun du premier et du deuxième composant matériel (7, 8) est situé sur le côté avant ou le côté arrière du corps de manche (1a...1g), de préférence dans la partie de manche (4a...4g) et de préférence sur le côté dorsal.

6. Corps de manche selon l'une des revendications 1 à 5, **caractérisé en ce que** dans la partie de manche (4c...4d) et/ou la partie de col (3c...3g), le corps de manche (1c...1g) présente une ouverture de passage (11) par laquelle le corps de manche (1c...1g) est divisé en deux bras partiels (6c...6g), chaque bras partiel (6c....6g) contenant un corps d'enveloppe en le premier composant matériel (7) et un corps d'âme en le deuxième composant matériel (8), entouré par le corps d'enveloppe, tandis que lors de la réunion des bras partiels (6c...6g) en direction de la partie de tête (2c...2g):
a. les deux corps d'âme en forme de barre se réunissent et se prolongent en direction de la partie de tête (2c...2g) sous la forme d'un corps d'âme commun en forme de barre englobé dans le corps d'enveloppe ou
b. se prolongent en direction de la partie de tête (2c...2g) parallèlement l'un à l'autre sous la forme de barres distinctes englobées dans le corps d'enveloppe,
et le ou les corps d'âme en forme de barre se prolongeant en forme de languette, de préférence dans la partie de col (3a...3g) ou la partie de tête (2a...2g).

7. Corps de manche selon l'une des revendications 1 à 6, **caractérisé en ce que** le premier et/ou le deuxième composant matériel (7, 8) sont des composants durs, de préférence en polypropylène (PP), en poly(téréphtalate de cyclohexylène diméthylène) (PCT-A), en polyéthylène (PE) ou en polymère de styrène, par exemple en styrène-acrylonitrile (SAN).

8. Corps de manche selon l'une des revendications 1 à 7, **caractérisé en ce que** le premier et/ou le deuxième composant matériel (7, 8) sont des composants malléables, de préférence en élastomère thermoplastique.

9. Procédé de fabrication d'un corps de manche (1a...1g) allongé, en particulier pour un article de soins corporels, par exemple pour une brosse à dents, en au moins deux composants matériels (7, 8) en matière synthétique thermoplastique, comprenant le moulage par injection des composants matériels (7, 8) dans un outil (20) de moulage par injection au moyen d'un procédé à canal chauffé,
dans lequel au moyen des étapes ci-dessous, au moins deux composants (7, 8) de matière synthétique sont injectés dans une cavité commune (21) de l'outil (20) de moulage par injection par l'intermédiaire d'un point d'injection commun disposé à l'extérieur d'une ligne de démoulage (12) formée lors du démoulage,
moulage par injection d'un premier composant matériel (7) dans la cavité (21) de l'outil et remplissage partiel de la cavité (21) de l'outil par le premier composant matériel (7), par l'intermédiaire d'une tuyère à canal chauffé,
refroidissement du premier composant matériel (7) injecté dans la cavité (21) de l'outil, au moins une âme fluide en le premier composant matériel (7) étant conservée,
moulage par injection d'un deuxième composant matériel (8) dans la cavité (21) de l'outil (20) de moulage par injection, par la même tuyère (23) à canal chauffé, et ensuite remplissage, de préférence complet, de la cavité (21) de l'outil par le deuxième composant matériel (8),
l'âme fluide du premier composant matériel (7) injecté préalablement dans la cavité (21) de l'outil étant refoulée dans la direction (M) d'écoulement de la matière pendant le moulage par injection du deuxième composant matériel (8), le premier composant matériel (7) au moins partiellement solidifié et reposant de préférence contre la paroi (33) de la cavité entourant au moins en partie le deuxième composant matériel (8) pendant l'introduction de ce dernier.

10. Procédé selon la revendication 9, **caractérisé en ce que** la cavité (21) de l'outil est configurée sous la forme d'une cavité allongée dotée d'un axe longitudinal (K), le point d'injection (10) étant disposé de préférence de telle sorte que le premier et le deuxième composant matériel soient injectés dans la cavité (21) de l'outil transversalement par rapport à l'axe longitudinal (K) de la cavité (21) de l'outil, de préférence sous un angle entre l'axe longitudinal (K) et la direction de fermeture du pointeau (V) compris entre 85° et 90°.

11. Procédé selon les revendications 9 ou 10, **caractérisé en ce que** le rapport entre le volume injecté du premier composant matériel (7) et le volume total de la cavité (21) de l'outil et le rapport entre l'âme liquide (7') en le premier composant matériel (7) et le volume non rempli de la cavité (21) de l'outil sont sélectionnés de telle sorte que le deuxième composant matériel (8) injecté en deuxième lieu perce dans la direction (M) d'écoulement de matière le premier composant matériel (7) qui l'entoure, de telle sorte qu'une section d'extrémité de la cavité (21) de l'outil située en avant dans la direction (M) d'écoulement de la matière soit complètement remplie exclusivement par le deuxième composant matériel (8).

12. Procédé selon les revendications 9 ou 10, **caractérisé en ce que** le rapport entre le volume injecté du premier composant matériel (7) et le volume total de la cavité (21) de l'outil et le rapport entre l'âme liquide (7') en le premier composant matériel (7) et le volume non rempli de la cavité (21) de l'outil sont sélectionnés de telle sorte que le deuxième composant matériel (8) refoule l'âme fluide (7') en le premier composant matériel (7) dans la direction (M) d'écoulement de matière, l'âme (7') refoulée remplissant une section d'extrémité de la cavité (21) de l'outil située en avant dans la direction (M) d'écoulement de matière, de telle sorte que le deuxième composant matériel (8) soit complètement entouré par le premier composant matériel (7), de préférence à l'exception du point d'injection (10) .

13. Procédé selon l'une des revendications 9 à 12, **caractérisé en ce que**
a. le volume total de la cavité (21) de l'outil, diminué du volume total du premier composant matériel (7) injecté, est inférieur à l'âme fluide (7') refoulée par le deuxième composant matériel (8) ou
b. le volume total de la cavité (21) de l'outil, diminué du volume total du premier composant matériel (7) injecté, est supérieur ou égal à l'âme fluide (7') refoulée par le deuxième composant matériel (8).

14. Procédé selon l'une des revendications 9 à 13, **caractérisé en ce que** dans la direction (M) d'écoulement de matière, la cavité (21) de l'outil se divise transitoirement en au moins deux canaux partiels (6f, 6g) qui se réunissent de nouveau et, lors de l'injection du deuxième composant matériel (8), l'âme fluide (7') en le premier composant matériel (7) est refoulée dans une section d'extrémité de la cavité (21) de l'outil située en avant dans la direction (M) d'écoulement de matière et le deuxième composant matériel (8) suit les canaux partiels (6f, 6g) en formant deux barres partielles de l'âme (7') refoulée,
a. **en ce que** les deux barres partielles se réunissent au point de réunion des deux canaux partiels (6f, 6g) et se prolongent en direction de la partie de tête (2c...2g) sous la forme d'un corps d'âme commun, en forme de barre, englobé par le corps d'enveloppe ou
b. suite à la réunion des deux canaux partiels (6f, 6g) les deux barres partielles se prolongent parallèlement l'une à l'autre et séparément en formant deux sections d'extrémité sortant en forme de languette.

15. Procédé selon l'une des revendications 9 à 16, **caractérisé en ce qu'**à la suite de l'injection du deuxième composant matériel (8), le premier composant matériel (7) est de nouveau injecté de telle sorte qu'au point d'injection (10), la surface soit formée du premier composant matériel (7).

16. Procédé selon l'une des revendications 9 à 15, **caractérisé en ce que** l'outil (20) de moulage par injection est un outil à canal chauffé qui contient une tuyère (23 à canal chauffé qui débouche dans une cavité (21) de l'outil et qui est configurée comme tuyère fermée par pointeaux, la tuyère (23) à canal chauffé contenant un premier pointeau de fermeture configuré comme pointeau creux (24) ainsi qu'un deuxième pointeau de fermeture (25) qui peut être introduit dans le pointeau creux (24), le premier pointeau de fermeture (24) formant dans la tuyère (23) à canal chauffé un canal extérieur (26) d'amenée de matière avec une paroi extérieure (33) du canal et un canal intérieur (27) d'amenée de matière avec son ouverture axiale de passage (29).

17. Procédé selon la revendication 16, **caractérisé en ce que** la tuyère (23) à canal chauffé présente une ouverture cylindrique de sortie (28), le premier pointeau de fermeture (24) présentant une section cylindrique d'extrémité (30) configurée de telle sorte qu'elle puisse être introduite en correspondance géométrique dans l'ouverture cylindrique de sortie (28) pour ainsi, en formant une surface d'étanchéité cylindrique qui s'étend parallèlement à la direction de fermeture (V), fermer le canal extérieur (26) d'amenée de matière hermétiquement par rapport à la cavité (21) de l'outil.

18. Procédé selon la revendication 17, **caractérisé en ce que** le deuxième pointeau de fermeture (25) présente une section cylindrique d'extrémité (31) et l'ouverture de passage (29) du premier pointeau de fermeture (24) est cylindrique dans sa section d'extrémité (30), de telle sorte que le deuxième pointeau de fermeture (25) puisse être introduit en correspondance géométrique dans l'ouverture de passage (29) prévue sur la section cylindrique d'extrémité (30) du premier pointeau de fermeture (24) pour ainsi, en formant une surface d'étanchéité cylindrique qui s'étend parallèlement à la direction de fermeture (V), fermer le canal intérieur (27) d'amenée de matière hermétiquement par rapport à la cavité (21) de l'outil.
